# EUROPÄISCHE PATENTANMELDUNG

(11) **EP 4 847 231 A1**
(43) Veröffentlichungstag der Anmeldung: **02.12.2026**
(21) Anmeldenummer: 26181179.8
(22) Anmeldetag: 26.05.2026
(51) Int. Cl.: B29C 51/04, B29C 51/06, B29C 51/08, B29C 51/10, B29C 51/20, B29C 51/26, B29C 51/30, B29C 51/32, B29C 51/44, B29C 51/18, B29K 67/00, B29L 31/56

(54) **VERFAHREN ZUM THERMOFORMEN VON DREIDIMENSIONALEN FORMTEILEN AUS EINEM FOLIENMATERIAL UND FORMWERKZEUG FÜR DIE HERSTELLUNG VON DREIDIMENSIONALEN FORMTEILEN AUS EINEM FOLIENMATERIAL**

(30) Priorität: 28.05.2025 DE 102025120842
(71) Anmelder: KIEFEL GmbH, 83395 Freilassing (DE)
(72) Erfinder: Knoll, Peter, 83404 Ainring (DE); Decoz, Cornelis Hendrikus Albertinus, 5161 ES Sprang-Capelle (NL); Koenen, Leendert Johannes, 5161 BH Sprang-Capelle (NL); Bogers, Adriaan Jan, 5161 VL Sprang-Capelle (NL)
(74) Vertreter: DTS Patent- und Rechtsanwälte PartmbB

(57) **Zusammenfassung**

Es werden ein Verfahren zum Thermoformen von dreidimensionalen Formteilen aus einem Folienmaterial und ein Formwerkzeug für die Herstellung von dreidimensionalen Formteilen aus einem Folienmaterial beschrieben.

## Beschreibung

### Technisches Gebiet

Es werden ein Verfahren zum Thermoformen von dreidimensionalen Formteilen aus einem Folienmaterial und ein Formwerkzeug für die Herstellung von dreidimensionalen Formteilen aus einem Folienmaterial beschrieben.

### Hintergrund

Die Herstellung von dreidimensionalen Formteilen aus einem Folienmaterial aus Kunststoff mittels Thermoformen erfolgt klassischerweise entweder in Bandstahl- oder Kippmaschinen. Ein Umformen von Folienmaterial in Kippmaschinen zeichnet sich dadurch aus, dass Formen und Stanzen in einem Formwerkzeug erfolgen können.

Es hat sich jedoch herausgestellt, dass es schwierig ist, eine konstante Materialstärke bei thermogeformten Formteilen zu erreichen bzw. sicherzustellen, dass das Folienmaterial durch das Umformen eine geforderte Materialstärke unterschreitet. Das Verhalten des Folienmaterials beim Umformen ist dabei stark vom verwendeten Material abhängig, was bei der Ausbildung von Formwerkzeugen und beim Formprozess berücksichtigt werden muss.

Dabei ist es für bestimmte Arten von Kunststoffen besonders schwierig, eine Mindeststärke beim Umformen sicherzustellen. Bspw. darf es nicht zu einer zu starken Materialschwächung kommen.

Bspw. lassen sich Kunststoffe aus PET in einem Thermoformprozess umformen, benötigen dafür aber eine höhere Formtemperatur. Die höhere Formtemperatur begünstigt jedoch eine Schwächung des Materials.

Weiterhin sind in letzter Zeit vermehrt Versuche unternommen worden, Formteile mit Gewinde mittels Thermoformen herzustellen. Für solche Formteile ist es essenziell, Anforderungen an die Materialstärke einzuhalten, damit das Formteil bspw. als Flaschendeckel auf einen korrespondieren Gewindeabschnitt einer Flasche aufgeschraubt werden kann. Eine schwache Ausbildung des Formteils und insbesondere im Gewindeabschnitt macht eine Verwendung eines Formteils unmöglich.

### Aufgabe

Es besteht daher die Aufgabe darin, eine Möglichkeit zum Formen von Formteilen anzugeben, welche die Probleme des Stands der Technik behebt. Zudem soll eine Möglichkeit zum Formen von Formteilen mit einem Gewinde angeben werden, wobei das Formen in einem Thermoformprozess erfolgt. Zudem soll eine Möglichkeit angegeben werden, Formteile aus PET-Kunststoffen herzustellen. Weiterhin ist es eine Aufgabe, ein Formen von Formteilen in Kippmaschinen, insbesondere von Formteilen mit einem Gewinde, anzugeben.

### Lösung

Die vorstehend genannte Aufgabe wird durch ein Verfahren zum Thermoformen von dreidimensionalen Formteilen aus einem Folienmaterial gelöst, wobei ein erstes Werkzeugteil und ein zweites Werkzeugteil eines Formwerkzeugs relativ zueinander bewegt werden, wobei zum Formen eines Folienmaterials ein Druckunterschied mittels Druckluft und/oder Vakuum in mindestens einem Formraum des Formwerkzeugs erzeugt wird, wobei ein Einbringen von Druckluft und/oder ein Erzeugen eines Unterdrucks erfolgt, bevor das Formwerkzeug eine geschlossene Formstellung erreicht hat.

Damit kann das Formen von Folienmaterial erfolgen, bevor das Formwerkzeug seine Formstellung erreicht. Der Formprozess kann somit verkürzt werden. Zudem kann ein Formen über einen Formeinsatz unterstützt werden, der beim Schließen des Formwerkzeugs in das Folienmaterial eintaucht und das Folienmaterial streckt. Das Formergebnis und damit die Qualität des gefertigten Formteils wird damit erheblich verbessert. Insbesondere lässt sich die Dehnung des Folienmaterials steuern, wodurch im Vergleich zu einem Formvorgang, der in der geschlossenen Formposition durch Anlegen von Überdruck und Vakuum beginnt, ein präziserer Formvorgang erzielt werden kann.

In weiteren Ausführungen kann das Einbringen von Druckluft und/oder das Erzeugen eines Unterdrucks erfolgen, wenn sich das Formwerkzeug in einem zumindest teilweise geöffneten Zustand befindet, bevor das erste Werkzeugteil und das zweite Werkzeugteil des Formwerkzeugs die geschlossene Formstellung erreicht haben.

In weiteren Ausführungen kann während des Schließens des Formwerkzeugs der Formraum werkzeugseitig abgedichtet werden, so dass das Einbringen von Druckluft und/oder das Erzeugen von Vakuum wirksam werden können, insbesondere im Formraum, bevor der Formraum durch die Anlage von korrespondierenden Kontaktflächen des ersten Werkzeugteils und des zweiten Werkzeugteils seine geschlossene Formstellung erreicht hat. In der geschlossenen Formstellung liegen Kontaktflächen des ersten Werkzeugteils und des zweiten Werkzeugteils direkt gegenüber und sind in der Regel bspw. nur in einem Formbereich über das Folienmaterial voneinander getrennt. Dabei ist der Formraum zwischen dem ersten Werkzeugteil und dem zweiten Werkzeugteil abgedichtet. Die werkzeugseitige Abdichtung gemäß der vorstehenden Ausführung ermöglicht es jedoch, dass bereits vor dem Erreichen der geschlossenen Formstellung ein Druckunterschied erzeugt werden kann, um den Formprozess zu starten.

In weiteren Ausführungen kann das Folienmaterial vor dem Erreichen der Formstellung geklemmt werden.

In weiteren Ausführungen kann das Folienmaterial zwischen gegenüberliegenden Kontaktflächen des ersten Werkzeugteils und des zweiten Werkzeugteils geklemmt werden, bevor das Formwerkzeug die Formstellung erreicht hat, wobei mindestens eine der Kontaktflächen eine bewegliche Klemmeinrichtung des ersten Werkzeugteils oder des zweiten Werkzeugteils ist, wobei eine erste bewegliche Klemmeinrichtung mit einem ersten Werkzeugkörper verbunden und relativ zu diesem verlagerbar ist und/oder wobei eine zweite bewegliche Klemmeinrichtung mit einem zweiten Werkzeugkörper verbunden und relativ zu diesem verlagerbar ist.

In weiteren Ausführungen kann das Folienmaterial zwischen einer ersten Klemmeinrichtung des ersten Werkzeugteils und einer zweiten Klemmeinrichtung des zweiten Werkzeugteils geklemmt werden.

In weiteren Ausführungen kann der mindestens eine Formraum über mindestens eine Dichtung abgedichtet werden.

In weiteren Ausführungen kann der Druckunterschied durch Einbringen von Druckluft und/oder Erzeugen eines Vakuums mindestens zwischen der geschlossenen Formstellung und einem zumindest teilweise geöffneten Zustand verändert werden. Bspw. kann ein Druckunterschied stufenweise oder kontinuierlich durch Veränderung der Druckluft und/oder des Vakuums angepasst werden. In weiteren Ausführungen kann der Druckunterschied ansteigen oder abfallen.

In weiteren Ausführungen kann das Einbringen von Druckluft und/oder Erzeugen eines Vakuums erfolgen, bevor ein Formeinsatz des ersten Werkzeugteils oder des zweiten Werkzeugteils das Folienmaterial streckt oder wenn ein Formeinsatz des ersten Werkzeugteils oder des zweiten Werkzeugteils in Kontakt mit dem Folienmaterial kommt.

In weiteren Ausführungen kann ein Verfahren zusätzlich folgende Schritte aufweisen:
- Positionieren eines Folienmaterials zwischen ein erstes Werkzeugteil und ein zweites Werkzeugteil eines Thermoformwerkzeugs,
- relative Verlagerung des ersten Werkzeugteils und des zweiten Werkzeugteils zum Erreichen einer Klemmposition, wobei das Folienmaterial zwischen einer ersten Klemmeinrichtung (bspw. erste bewegliche Platte) des ersten Werkzeugteils und einer zweiten Klemmeinrichtung (bspw. zweite bewegliche Platte) des zweiten Werkzeugteils geklemmt wird, wobei die erste Klemmeinrichtung und die zweite Klemmeinrichtung korrespondierende Öffnungen aufweisen, die einen Formbereich definieren,
- Verlagern mindestens eines Formeinsatzes des ersten Werkzeugteils aus einer Initialstellung durch eine Öffnung der ersten Klemmeinrichtung im Formbereich, wobei eine Formkontur des Formeinsatzes in der Initialstellung eine der zweiten Klemmeinrichtung zugewandte Kontaktfläche der ersten Klemmeinrichtung nicht überragt, in eine Formstellung, wobei die Formkontur des Formeinsatzes die der zweiten Klemmeinrichtung zugewandte Kontaktfläche der ersten Klemmeinrichtung überragt und das Folienmaterial gestreckt wird, wobei die Formkontur des Formeinsatzes und das Folienmaterial durch eine korrespondierende Öffnung der zweiten Klemmeinrichtung im Formbereich in einen Formraum des zweiten Werkzeugteils bewegt werden, und
- Ausführen eines Stanzhubs, wobei ein Stanzwerkzeug mit einer Stanzkontur des zweiten Werkzeugteils durch die Öffnung der zweiten Klemmeinrichtung hindurch in einen Stanzraum der Öffnung der ersten Klemmeinrichtung gedrückt wird und dabei das Folienmaterial an einer korrespondieren Schnittfläche des ersten Werkzeugteils gestanzt wird.

Bspw. kann eine Folie aus einem Kunststoff (bspw. PET, rPET, etc.) mit einer Ausgangsstärke von 0,8 bis 0, bspw. ca. 0,86 mm, umgeformt werden, wobei an den dünnsten Stellen der umgeformten Folie die Materialstärke nicht unter 0,5 mm fällt. Bei vergleichbaren Verfahren aus dem Stand der Technik mit daraus bekannten Werkzeugausbildungen beträgt die Materialstärke in einem vergleichbaren Folienabschnitt 0,3 mm.

Es ist offensichtlich, dass eine solche wesentliche Verbesserung zu deutlich stabileren Formteilen führt, welche dann bspw. auch für spezielle und komplexe Formteile (bspw. Formteile mit Gewinde, z.B. Flachen- oder Becherdeckel) verwendet werden können.

Vorteilhaft wird das Verfahren mit einem Stanzhub ausgeführt, so dass die Formteile ohne abstehende Verbindungsreste ("kerbenfrei") in einem Formwerkzeug ausgestanzt werden können. Eine nachträgliche Bearbeitung, bspw. Ausstanzen oder Nachbearbeiten von Kerben, kann somit entfallen, wodurch der Aufwand und die Kosten wesentlich reduziert werden.

Es kann dabei zwischen der Formkontur und dem in der Formstellung umgebenden Formraum der Abstand so groß sein, dass das Folienmaterial beim Strecken nicht mit dem Formraum in Kontakt kommt. Damit wird ein Abkühlen des Folienmaterials über den Formraum verhindert. Dies unterstützt das Strecken und sorgt auch dafür, dass die Materialstärke nicht so stark reduziert wird.

In weiteren Ausführungen kann das zweite Werkzeugteil einen relativ zum zweiten Werkzeugteil verlagerbaren Niederhalter mit einem die Formkontur des Formeinsatzes umgebenden ersten Formrand mit einer zweiten Formkontur an der dem Folienmaterial zugewandten Unterseite aufweisen, welche das Folienmaterial gegen einen korrespondierenden zweiten Formrand des ersten Werkzeugteils drückt. Hierüber kann ein zusätzliches Umformen erreicht werden. Der Niederhalter kann dabei in einem Freiraum zwischen dem Formraum und der Formkontur bewegt werden.

In weiteren Ausführungen kann der Niederhalter nach der Erzeugung des Druckunterschieds aus einer eingefahrenen Position im zweiten Werkzeugteil in den Formraum bewegt werden.

In weiteren Ausführungen kann während des Stanzhubs das Stanzwerkzeug das Folienmaterial an einer Seitenfläche des Formeinsatzes oder eines Schneidstempels, in welchem der Formeinsatz aufgenommen ist, abscheren.

In weiteren Ausführungen kann die Formkontur des Formeinsatzes mindestens einen Gewindeabschnitt aufweisen und zum Entformen des dreidimensionalen Formteils der Formeinsatz rotiert werden. Damit können Formteile mit einem Gewinde geformt, welche bspw. als Deckel für Flaschen, Becher oder dergleichen verwendet werden können. Damit lassen sich Formteilen mit einem Gewinde insbesondere in einer Kippmaschine formen.

In weiteren Ausführungen kann die mindestens eine Öffnung der ersten Klemmeinrichtung (erste bewegliche Platte) in Stanzrichtung mindestens abschnittweise eine korrespondierend zur Stanzkontur ausgebildete Kontur aufweisen, wobei die Stanzkontur und die Kontur der Öffnung radial zur Stanzrichtung variierend ausgebildet sind, und vor einer Rotation des Formeinsatzes zum Entformen der Formeinsatz relativ zur ersten beweglichen Platte bewegt wird, so dass ein Formteilrand des gestanzten Formteils über die Kontur der mindestens einen Öffnung der ersten beweglichen Platte verdrehsicher gehalten wird. Die Stanzkontur verhindert eine Rotation des Formteils nach dem Stanzen während des Entformens. Dabei wird zum Entformen eines geformten Formteils der Formeinsatz mit der Formkontur und dem geformten Formteil relativ zum ersten Werkzeugkörper in die Initialstellung verlagert, wobei ein Formteilrand des geformten Formteils über eine korrespondierend zum Formteilrand ausgebildete Stanzkontur in der ersten beweglichen Platte gegen ein Verdrehen gesichert wird, und anschließend der Formeinsatz und die Formkontur relativ gegenüber dem Formteil rotiert werden.

In weiteren Ausführungen kann das Entformen des gestanzten Formteils durch Rotation des Formeinsatzes in mindestens zwei Schritten erfolgen, wobei das vollständige Entformen des gestanzten Formteils erfolgt, nachdem das erste Werkzeugteil zusätzlich zu einer relativen, parallelen Verlagerung zum zweiten Werkzeugteil gekippt worden ist.

In weiteren Ausführungen kann über Öffnungen im Formeinsatz ein Unterdruck und/oder über Öffnungen im zweiten Werkzeugteil ein Überdruck im Formraum erzeugt werden.

In weiteren Ausführungen kann ein Unterdruck über die Öffnungen in einer Formfläche der Formkontur des Formeinsatzes erzeugt werden.

In weiteren Ausführungen kann während des Streckens des Folienmaterials das Folienmaterial beabstandet zum Formraum im zweiten Werkzeugteil verlaufen, so dass kein zusätzlicher Kontakt mit Werkzeugteilen besteht, was zu einem Abkühlen des Folienmaterials führen würde. Ein Abkühlen des Folienmaterials ist für das Formen (Strecken und Vakuum/Druck-Formen) nachteilig und kann zu ungleichmäßigen Materialstärken führen. Zudem können die Eigenschaften des Formteils dadurch negativ beeinflusst werden.

In weiteren Ausführungen kann zum Klemmen des Folienmaterials die erste Klemmeinrichtung (bspw. erste bewegliche Platte) gemeinsam mit einem ersten Werkzeugkörper des ersten Werkzeugteils verlagert werden, wobei die erste Klemmeinrichtung bis zum Erreichen der Klemmposition und in der Klemmposition beabstandet zum ersten Werkzeugkörper ist. Die Klemmeinrichtung bzw. Klemmplatte kann dabei bspw. über eine Federeinrichtung oder dergleichen vorgespannt sein. Wird nach Erreichen der Klemmposition der erste Werkzeugkörper weiter in Formrichtung verlagert, wird der Abstand zwischen der ersten Klemmeinrichtung gegenüber dem ersten Werkzeugkörper reduziert, wobei bspw. Federn gespannt werden. Dabei tritt jedoch der Formeinsatz mit der Formkontur sukzessive aus der ersten Öffnung hervor. Somit kann das Eintauchen der Formkontur in das Folienmaterial nach Maßgabe des Abstands zwischen dem ersten Werkzeugkörper und der ersten Klemmeinrichtung gesteuert werden.

In weiteren Ausführungen kann dazu, nach dem Erreichen der Klemmposition, der erste Werkzeugkörper gegenüber der ersten beweglichen Platte (erste Klemmeinrichtung) weiter verlagert werden, wobei der Abstand zwischen der ersten beweglichen Platte und dem ersten Werkzeugkörper verringert und der im ersten Werkzeugkörper gelagerte Formeinsatz in die Formstellung verbracht wird. Dabei drückt der Formeinsatz das Folienmaterial in den Formraum, wobei die zweite bewegliche Platte (zweite Klemmeinrichtung) gegenüber dem zweiten Werkzeugkörper nicht verlagert wird.

In weiteren Ausführungen kann dazu nach und/oder während des Vorformens der erste Werkzeugkörper (bspw. Werkzeugplatte) zusammen mit der ersten beweglichen Platte (erste Klemmeinrichtung) weiterverlagert werden, wobei dabei, bspw. durch die Verlagerung der ersten beweglichen Platte und des ersten Werkzeugkörpers, die zweite bewegliche Platte (zweite Klemmeinrichtung) gegenüber einem zweiten, stationären Werkzeugkörper des zweiten Werkzeugteils verlagert wird und dabei das Stanzwerkzeug in den Formraum bewegt wird. Das Stanzwerkzeug wird nur soweit verlagert, dass es eine Kontaktfläche der zweiten beweglichen Platte nicht überragt, wobei das Folienmaterial nicht durchtrennt wird. Es kann dabei jedoch bereits ein Vorstanzen erfolgen. Die Verlagerung kann zwangsgesteuert erfolgen, wobei eine weitere Federeinrichtung oder dergleichen vorgesehen sein kann. Die erste bewegliche Platte und der erste Werkzeugkörper können die Verlagerung der zweiten beweglichen Platte gegenüber dem zweiten Werkzeugkörper dann ausführen, wenn bspw. eine Entriegelung zwischen zweiter beweglicher Platte und zweitem Werkzeugkörper erfolgt ist. In weiteren Ausführungen kann die jeweilige Federkraft von Federeinrichtungen zwischen den beweglichen Platten und den zugeordneten Werkzeugkörpern so ausgelegt werden, dass die erste bewegliche Platte die zweite bewegliche Platte erst dann gegen den zweiten Werkzeugkörper drücken kann, wenn die erste bewegliche Platte am ersten Werkzeugkörper anliegt.

In weiteren Ausführungen kann dann der im zweiten Werkzeugkörper angeordnete Niederhalter in den Formraum verlagert werden, wobei über den Niederhalter im Formraum ein Überdruck erzeugt wird, nachdem der erste Formrand des Niederhalters eine Formstellung oder Formposition erreicht hat, in der der erste Formrand das Folienmaterial gegen den zweiten Formrand des ersten Werkzeugteils drückt. Formposition und Formstellung werden hierin synonym verwendet, sofern nichts anderes angegeben ist. Dabei kann ein Formen eines Formteilrands des Formteils durch die zweite Formkontur an der Unterseite des Niederhalters erfolgen. Die Verlagerung des mindestens einen Niederhalters kann über einen separaten weiteren Antrieb erfolgen.

In weiteren Ausführungen können nach dem Formen des Formteils die zweite bewegliche Platte (zweite Klemmeinrichtung) und die erste bewegliche Platte (erste Klemmeinrichtung) durch eine weitere Verlagerung des ersten Werkzeugkörpers gegen den zweiten Werkzeugkörper zum Ausführen des Stanzhubs bewegt werden. Hierzu erfolgt die vorherige Verlagerung des ersten Werkzeugkörpers gegen den stationären zweiten Werkzeugkörper zur Verlagerung des mindestens einen Niederhalters in den Formraum nur so weit, dass ein ausreichender Abstand zwischen der zweiten beweglichen Platte und dem zweiten Werkzeugkörper zur Ausführung des Stanzhubs verbleibt.

Die vorstehend genannte Aufgabe wird auch durch ein Formwerkzeug zum Thermoformen von dreidimensionalen Formteilen aus einem Folienmaterial gelöst, mindestens aufweisend ein erstes Werkzeugteil und ein zweites Werkzeugteil, die relativ zueinander bewegbar sind, wobei zum Formen eines Folienmaterials ein Druckunterschied mittels Druckluft und/oder Vakuum in mindestens einem Formraum des Formwerkzeugs erzeugt wird, wobei das erste Werkzeugteil und/oder das zweite Werkzeugteil mindestens eine Dichtung aufweisen, die dazu ausgebildet ist, mindestens einen Formraum zwischen dem ersten Werkzeugteil und dem zweiten Werkzeugteil so abzudichten, dass ein Formen mittels Druckunterschied durchführbar ist, bevor das Formwerkzeug eine geschlossene Formstellung erreicht hat.

Es können je Formraum mindestens eine Dichtung und/oder eine umlaufende Dichtung vorgesehen sein, die bspw. einen äußeren Bereich des Formwerkzeugs umgibt, so dass ein Abdichten am äußeren Umfang im Bereich einer Formebene des Formwerkzeugs umgibt. Die mindestens eine Dichtung ermöglicht es den Formprozess durch Erzeugen eines Druckunterschieds zu starten, bevor eine geschlossene Formstellung erreicht wird.

In weiteren Ausführungen können das erste Werkzeugteil und/oder das zweite Werkzeugteil mindestens eine Klemmeinrichtung und einen Werkzeugkörper aufweisen, wobei die mindestens eine Klemmeinrichtung mit dem zugehörigen Werkzeugkörper verbunden und relativ gegenüber dem zugehörigen Werkzeugkörper verlagerbar ist.

In weiteren Ausführungen kann die mindestens eine Klemmeinrichtung so ausgebildet sein, dass sie beim Schließen des Formwerkzeugs dem zugehörigen Werkzeugkörper vorauseilt, wobei die mindestens eine Dichtung zwischen der mindestens einen Klemmeinrichtung und dem zugehörigen Werkzeugkörper angeordnet ist.

In weiteren Ausführungen kann die mindestens eine Dichtung am Werkzeugkörper angeordnet sein.

In weiteren Ausführungen kann der Werkzeugkörper mindestens eine Aufnahme aufweisen, in welche die zugehörige Klemmeinrichtung beim Schließen des Formwerkzeugs mindestens teilweise eintaucht.

In weiteren Ausführungen kann die mindestens eine Dichtung in der Aufnahme angeordnet sein.

In weiteren Ausführungen kann die mindestens eine Dichtung aus Silikon oder einem Elastomer bestehen oder ein Silikon oder Elastomer aufweisen.

In weiteren Ausführungen kann
- das erste Werkzeugteil mindestens einen Formeinsatz mit einer Formkontur für ein dreidimensionales Formteil und eine erste Klemmeinrichtung mit mindestens einer Öffnung aufweisen, wobei die erste Klemmeinrichtung und der mindestens eine Formeinsatz relativ zueinander bewegbar sind,
- das zweite Werkzeugteil mindestens ein Stanzwerkzeug und eine zweite Klemmeinrichtung mit mindestens einer Öffnung aufweisen, wobei das mindestens eine Stanzwerkzeug und die zweite Klemmeinrichtung relativ zueinander bewegbar sind,
- das Formwerkzeug dazu ausgebildet ist, durch relative Verlagerung der ersten Klemmeinrichtung und der zweiten Klemmeinrichtung Folienmaterial einzuklemmen, wobei der Formeinsatz aus einer Initialstellung, in welcher der Formeinsatz eine der zweiten Klemmeinrichtung zugewandte Kontaktfläche der ersten Klemmeinrichtung nicht überragt, durch die Öffnungen der ersten Klemmeinrichtung und der zweiten Klemmeinrichtung in einen Formraum des zweiten Werkzeugteils in eine Formstellung verlagerbar ist, wobei durch Verlagerung des Formeinsatzes geklemmtes Folienmaterial streckbar ist,
- wobei das Formwerkzeug Mittel zum Erzeugen eines Druckunterschieds aufweist, so dass gestrecktes Folienmaterial gegen die Formkontur zur Umformung drückbar ist, und wobei nach dem Umformen ein Stanzhub durchführbar ist, wobei das Stanzwerkzeug durch die Öffnung der zweiten Klemmeinrichtung hindurch in einen Stanzraum der Öffnung der ersten Klemmeinrichtung drückbar und dabei das Folienmaterial an einer korrespondieren Schnittfläche des ersten Werkzeugteils stanzbar ist.

Die Ausbildung des Formwerkzeugs ermöglicht das Formen von Formteilen, wobei, wie für das vorstehend beschriebene Verfahren angegeben, die Materialstärke des Folienmaterials beim Umformen gegenüber aus dem Stand der Technik bekannten Verfahren und Formwerkzeugen weniger stark abnimmt und damit wesentlich stabilere Formteile gefertigt werden können. In weiteren Ausführungen kann zumindest ein Großteil der einzelnen Bewegungen der am Formprozess beteiligten Formwerkzeugkomponenten durch eine Zwangssteuerung erreicht werden, so dass der Steuerungsaufwand erheblich reduziert ist.

In weiteren Ausführungen kann das erste Werkzeugteil zum Formen parallel zum zweiten Werkzeugteil verlagerbar und zum Auswerfen von Formteilen kippbar sein. Das Formwerkzeug kann dabei speziell für Kippwerkmaschinen ausgebildet sein. Durch den Aufbau des Formwerkzeugs wird damit die Möglichkeit geschaffen, komplexe Formteile (bspw. Formteile mit einem Gewinde) in einem Thermoformprozess zu fertigen, wobei ein Formen und Stanzen in einer Formstation in einem Formwerkzeug durchgeführt werden ("trim in place"). Bspw. kann ein Formen von Flaschendeckeln aus verschiedenen Materialien (bspw. PET-Materialien) erfolgen.

In weiteren Ausführungen kann das zweite Werkzeugteil einen Niederhalter aufweisen, der eine die Formkontur des Formeinsatzes umgebende Formwand aufweist. Beim Verlagern des Niederhalters in den Formraum kann dieser an einer Außenseite des Folienmaterials zusätzliche eine in Bewegungsrichtung verlaufende Umfangsprägung einbringen. Dies erfolgt nach dem Umformen mittels des Druckunterschieds, so dass das Folienmaterial bereits seine finale Umformung über die Formkontur erreicht hat.

In weiteren Ausführungen kann der Niederhalter in einer Aufnahme aus einer eingefahrenen Position in eine Formstellung verfahrbar sein, wobei eine Formfläche eines unteren Formrands des Niederhalters in der Formstellung das Folienmaterial gegen eine korrespondierende zweite Formfläche des ersten Werkzeugteils drückt, wodurch eine zusätzliche Formung erfolgen kann. Bspw. können hierüber Prägungen und lokale Umformungen in einem die Formkontur des Formeinsatzes umgebenden Bereich des Folienmaterials eingebracht werden.

In weiteren Ausführungen kann hierzu der Formeinsatz eine die Formkontur umgebende zweite Formfläche aufweisen, die der Formfläche des Formrands des Niederhalters gegenüberliegt.

In weiteren Ausführungen kann das Formwerkzeug einen Schneidstempel aufweisen, der den Formeinsatz umgibt und eine zu einer Stanzkontur des Stanzwerkzeugs korrespondierende Stanzkontur aufweist. Die Stanzkontur des Schneidstempels dient zum Durchtrennen des Folienmaterials nach dem Umformen.

In weiteren Ausführungen kann der Formeinsatz drehbar im Schneidstempel gelagert sein, so dass ein Entformen von Formteilen mit einem Gewinde ermöglicht wird.

In weiteren Ausführungen kann der Schneidstempel eine die Formkontur des Formeinsatzes umgebende zweite Formfläche aufweisen, welche bspw. zum Prägen und Umformen eines Rands des Formteils dient.

In weiteren Ausführungen kann der Schneidstempel eine zweite Formkontur aufweisen, die in Formrichtung ausgebildet ist, wobei zwischen der zweiten Formkontur und der Formfläche des unteren Formrands des Niederhalters Folienmaterial verpresst und dabei geprägt werden kann.

In weiteren Ausführungen kann der Niederhalter eine Außenkontur aufweisen, die der Stanzkontur des Stanzwerkzeugs entspricht, wobei die Aufnahme des Niederhalters im Stanzwerkzeug gebildet ist. Der Niederhalter ist dadurch über die Stanzkontur geführt. Der Niederhalter kann durch seine Außenkontur das Folienmaterial umfangsseitig beim Stanzen halten, so dass es zu keinem Einzug von Folienmaterial oder einer Beschädigung des Folienmaterials im Randbereich des Formteils kommt.

In weiteren Ausführungen kann die Formkontur des Formeinsatzes mindestens einen Gewindeabschnitt aufweisen, so dass hierüber bspw. Deckel gefertigt werden können.

In weiteren Ausführungen kann die mindestens eine Öffnung der ersten Klemmeinrichtung (bspw. erste bewegliche Platte) in Richtung des Stanzhubs mindestens abschnittweise eine korrespondierend zur Stanzkontur ausgebildete Kontur aufweisen, wobei die Stanzkontur und die Kontur der Öffnung der ersten beweglichen Platte (erste Klemmeinrichtung) radial zur Stanzrichtung variierend ausgebildet sind. Hierüber kann ein Entformen von Formteilen mit einem Gewinde erreicht werden, wozu eine Rotation des Formeinsatzes notwendig ist, zugleich das Formteil gegen ein Verdrehen gesichert werden muss.

In weiteren Ausführungen kann in der Formstellung vor der Verlagerung des Niederhalters gestrecktes Folienmaterial beabstandet zur Formwand verlaufen, damit es zu keinem Kontakt mit dem Niederhalter kommt und eine Kühlung des Folienmaterials verhindert wird.

In weiteren Ausführungen können das erste Werkzeugteil und/oder das zweite Werkzeugteil mindestens einen Kühlkreislauf und/oder Kühlelemente aufweisen. Eine Kühlung ist erforderlich, damit die geformten Formteile schnell entformt und weiterverarbeitet werden können. Hierzu können verschiedene Kühlkonzepte und Kühlsysteme zum Einsatz kommen. Bspw. kann eine Fluid (bspw. Wasserkühlung) zum Einsatz kommen. Es kann eine direkte Kühlung, eine Kontaktkühlung etc. verwendet werden.

In weiteren Ausführungen können die Mittel zum Erzeugen eines Druckunterschieds
- Öffnungen im Formeinsatz zum Ansaugen von Folienmaterial durch Unterdruck, und/oder
- Öffnungen im Formraum und/oder im Niederhalter zur Erzeugung von Überdruck aufweisen.

In weiteren Ausführungen kann das erste Werkzeugteil einen ersten Werkzeugkörper aufweisen und die erste Klemmeinrichtung (bspw. erste bewegliche Platte) gemeinsam und relativ zum ersten Werkzeugkörper verlagerbar sein, und/oder das zweite Werkzeugteil kann einen zweiten Werkzeugkörper aufweisen und die zweite Klemmeinrichtung (zweite bewegliche Platte) gemeinsam und relativ zum zweiten Werkzeugkörper verlagerbar sein.

In weiteren Ausführungen kann das Formwerkzeug dazu ausgebildet sein, ein Verfahren gemäß einer der vorstehend beschriebenen Varianten auszuführen.

Weitere Merkmale, Ausgestaltungen und Vorteile ergeben sich aus der nachfolgenden Darstellung von Ausführungsbeispielen mit Bezug auf die Figuren.

### Kurzbeschreibung der Figuren

In den Zeichnungen zeigt:
- Fig. 1A und 1B: schematische Darstellungen eines als Deckel ausgebildeten Formteils;
- Fig. 2: eine schematische Schnittansicht eines Ausschnitts eines Formwerkzeugs;
- Fig. 3-10: schematische Darstellungen eines Ausschnitts des Formwerkzeugs während des Formens eines Formteils und der Formschritte eines Verfahrens zum Formen;
- Fig. 11A und 11B: weitere Darstellungen des Formwerkzeugs; und
- Fig. 12 bis 15: schematische Darstellungen eines Ausschnitts eines Formwerkzeugs einer weiteren Ausführungsform während des Formens eines Formteils und der Formschritte eines Verfahrens zum Formen in einer weiteren Ausführungsform.

### Detaillierte Beschreibung von Ausführungsbeispielen

Nachfolgend werden mit Bezug auf die Figuren Ausführungsbeispiele der hierin beschriebenen technischen Lehre dargestellt. Für gleiche Komponenten, Teile und Abläufe werden in der Figurenbeschreibung gleiche Bezugszeichen verwendet. Für die hierin offenbarte technische Lehre unwesentliche oder für einen Fachmann sich erschließende Komponenten, Teile und Abläufe werden nicht explizit wiedergegeben. Im Singular angegebene Merkmale sind auch im Plural mitumfasst, sofern nicht explizit etwas anderes ausgeführt ist. Dies betrifft insbesondere Angaben wie "ein" oder "eine.

Nachfolgend werden verschiedene Ausführungen zum Thermoformen von Formteilen 412 beschrieben. Die Formteile 412 können aus einem Folienmaterial 400, bspw. PET oder rPET, geformt werden. In weiteren Ausführungen können auch andere Materialen zum Einsatz kommen.

Ein dreidimensionales Formteil 412 bezeichnet hierin insbesondere ein aus dem Folienmaterial 400 durch Thermoformen hergestelltes Formteil, das nach dem Umformen eine von einer ebenen Folienform abweichende räumliche Form aufweist. Ein solches dreidimensionales Formteil 412 kann insbesondere Vertiefungen, Erhebungen, Seitenwände, Randabschnitte, Gewindeabschnitte, Prägungen, Rillen, Flaps und/oder andere durch Umformen des Folienmaterials 400 hergestellte Funktions- oder Formabschnitte aufweisen. Das Thermoformen umfasst hierin insbesondere ein Erwärmen und Umformen des Folienmaterials 400 in einem Formwerkzeug 100, wobei das Umformen durch eine Relativbewegung von Werkzeugteilen und/oder durch einen Druckunterschied mittels Druckluft und/oder Vakuum unterstützt oder bewirkt werden kann.

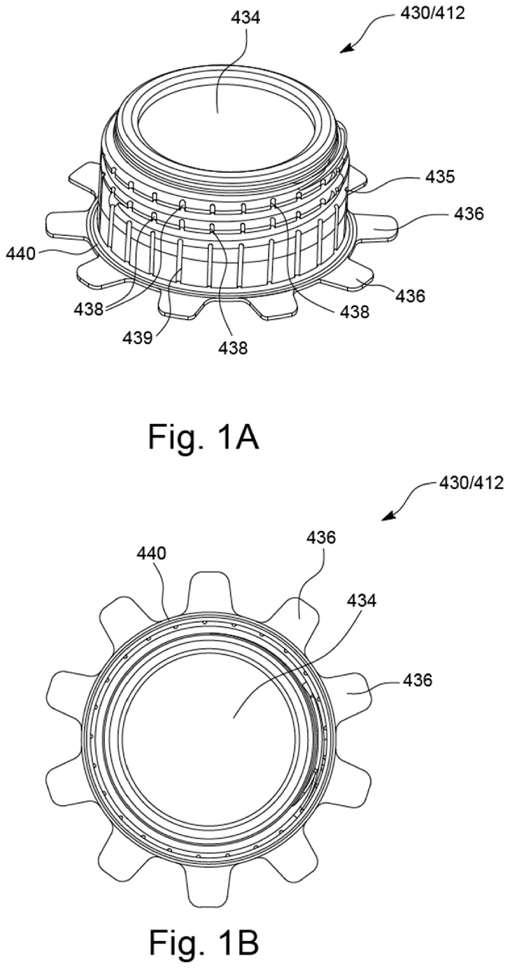

Bspw. können Deckel 430 aus einem Folienmaterial 400 geformt werden, die einen Gewindeabschnitt 435 aufweisen und auf einen Flaschenhals einer nicht dargestellten Flasche oder eines anderen Behälters aufgeschraubt werden können. Derartige Deckel 430 dienen als Verschlusselement, wobei "Deckel" und "Verschlusselement" synonym verwendet werden. Die Fig. 1a), b) zeigen schematische Darstellungen eines als Deckel 430 ausgebildeten Formteils 412, wobei der Deckel 430 einen zentralen Deckelabschnitt 434, eine umlaufende Seitenwand mit einem Gewindeabschnitt 435 und abstehende Flaps 436 aufweist. Die Flaps 436 können in einem nachgelagerten Formschritt umgebogen werden. Umgebogene Flaps 436 dienen dann als Widerhaken und können einen Abschnitt (bspw. Ring) einer Flasche hintergreifen. Die Flaps 436 erschweren damit ein Öffnen einer Flasche nach dem erstmaligen Verschließen durch den Deckel 430. Zusätzlich kann ein Aufreißen einer Perforation am Deckel 430 das erstmalige Öffnen sichtbar machen.

Anders als in Fig. 1 gezeigt, können die Flaps 436 in weiteren Ausführungen eine Prägung aufweisen. Prägungen können durch umgeformte Bereiche bzw. Erhebungen in der Fläche der Flaps 436 gebildet sein und sich in der Darstellung von Fig. 1a) nach oben erstrecken. In einem umgebogenen Zustand können solche Prägungen einen Widerhaken bilden, der einen Ring einer Flasche hintergreift. Gewöhnlich werden solche Verschlusselemente in einem Spritzgussverfahren hergestellt und können daher ohne Schwierigkeiten komplexe Geometrien (Gewinde, Widerhaken) ausbilden. Die Herstellung solcher Formteile 412 in einem Thermoformprozess ist demgegenüber eine Herausforderung, die durch die nachfolgend beschriebene Ausbildung eines Formwerkzeugs 100 und den Formprozess gelöst werden kann.

Verschlusselemente können auch eine andere Ausgestaltung als in den exemplarischen Ausführungsbeispielen in den Figuren gezeigte Gestalt aufweisen. Bspw. können Formteile 412 bzw. Verschlusselemente anstelle eines Innengewindes zum Verschließen einer Behälteröffnung von außen ein Außengewinde aufweisen, welches in eine entsprechend ausgebildete Behälteröffnung eingedreht werden kann.

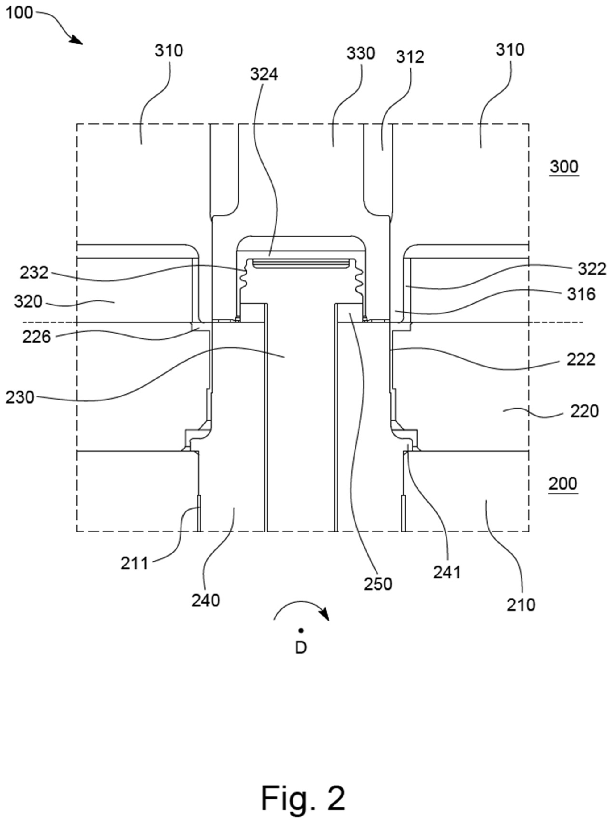

Fig. 2 zeigt eine schematische Schnittansicht eines Ausschnitts eines Formwerkzeugs 100, welches einen ersten Werkzeugteil 200 und einen zweiten Werkzeugteil 300 aufweist. Das Formwerkzeug 100 kann bspw. als Kippwerkzeug ausgebildet sein, wobei der zweite Werkzeugteil 300 stationär in einer Formstation einer als Kippmaschine ausgebildeten Thermoformanlage angeordnet ist. Der erste Werkzeugteil 200 bildet ein unteres Werkzeugteil, das sowohl in Bezug auf das stationäre, obere zweite Werkzeugteil 300 linear bewegbar ist, als auch seitlich zum Auswerfen geformter Formteile 412 kippbar ist. Die schematisch angedeutete Dreh- bzw. Kippachse D verläuft unterhalb der dargestellten Bestandteile des ersten Werkzeugteils 200. Die Bewegung des unteren ersten Werkzeugteils 200 kann über einen speziellen Antrieb, bspw. mittels Kurvenscheiben, gesteuert werden. In weiteren Ausführungen können auch andere Antriebsysteme zum Einsatz kommen.

Der erste Werkzeugteil 200 weist einen ersten Werkzeugkörper 210 auf. Im Werkzeugkörper 210 verlaufen Kühlsysteme zum Kühlen der formgebenden Komponenten, welche nachfolgend im Detail beschrieben werden.

Im ersten Werkzeugkörper 210 ist eine Vielzahl an Öffnungen 211 vorgesehen, in welche jeweils ein Schneidstempel 240 aufgenommen ist. Die Schneidstempel 240 sind Bestandteil von formgebenden Komponenten. In den Figuren sind zur Illustration jeweils nur ein Schneidstempel 240 und weitere formgebende Komponente dargestellt. Es können jedoch in einem Formwerkzeug 100 eine Vielzahl an Werkzeugkomponenten vorgesehen sein, welche jeweils zum Formen eine Formteils 412 dienen. Wenn nachfolgend von der Schneidstempel 240 sowie von den entsprechenden Komponenten gesprochen wird ist damit auch eine Vielzahl an Komponenten umfasst, welche gemeinsam bewegt werden können.

Der Schneidstempel 240 weist eine Schulter 241 auf. Über die Schulter 241 stützt sich der Schneidstempel 240 am Werkzeugkörper 210 ab. Der Schneidstempel 240 weist eine innenliegende Öffnung auf, in der ein Formeinsatz 230 drehbar gelagert ist. Der Formeinsatz 230 weist an seinem oberen Ende eine Formkontur 232 auf. Die Formkontur 232 bildet die Geometrie eines in Fig. 1 gezeigten Deckels 430 ab und weist eine Formfläche 236 auf. Ein Teil der Formfläche 236 bildet einen Gewindeabschnitt 238 aus.

Der obere Teil des Formeinsatzes 230 mit der Formkontur 232 ist über ein Mittelstück 250 im Schneidstempel 240 gelagert. In weiteren Ausführungen kann das Mittelstück 250 mit dem Schneidstempel 240 eine Einheit bilden und einstückig ausgebildet sein. Am äußeren Umfang kann das Mittelstück in Formrichtung verlaufende Kerben oder dergleichen aufweisen, um Rillen 439 am Formteil 412 bzw. Deckel 430 auszubilden.

Der Schneidstempel 240 weist eine Seitenwand auf, die mindestens bereichsweise eine Außenkontur 242 aufweist. Die Außenkontur 242 ist so ausgebildet, dass der Schneidstempel 240 in einer Öffnung 222 einer ersten beweglichen Platte 220 des ersten Werkzeugteils 200 geführt wird. Hierzu weist die Öffnung 222 eine Kontur 224 auf. Die Kontur 224 entspricht dem Stanzmuster für einen Formteilrand 432 des Formteils 412.

Ein Bereich einer Seitenfläche 246 des Schneidstempels 240 dient zum Abscheren des Folienmaterials 400 während eines Stanzhubs. Hierzu wird das Folienmaterial 400 über ein Stanzwerkzeug 316 mit einer Stanzkontur 314 an der Seitenfläche 246 abgeschert. Im Bereich der Seitenfläche 246 weist der Schneidstempel 240 dazu die Außenkontur 242 auf. Auch die Stanzkontur 314 entspricht dem Stanzmuster für den Formteilrand 432 mit Flaps 436, wobei die Stanzkontur 314 und die Außenkontur 242 so aufeinander abgestimmt und ausgebildet sind, dass die Stanzkontur 314 von außen an der Seitenfläche 246 entlang geführt werden kann.

Der Schneidstempel 240 weist einen zweiten Formrand 244 auf, welcher nach oben hin eine zweite Formfläche 243 mit einer zweiten Formkontur 248 aufweist. Die zweite Formkontur 248 kann in weiteren Ausführungen Erhebungen aufweisen, die zur Ausbildung von Prägungen an den Flaps 436 dienen können.

Die erste Werkzeughälfte bzw. das erste Werkzeugteil 200 weist zusätzlich die erste bewegliche Platte 220 mit einer Vielzahl an ersten Öffnungen 222 auf. In den Öffnungen 222 ist der obere Teil des Schneidstempels 240 aufgenommen und über die Kontur 224 der ersten Öffnungen 222 sowie die Außenkontur 242 geführt.

Die erste bewegliche Platte 220 weist eine Kontaktfläche 228 auf. Über die Kontaktfläche 228 wird Folienmaterial 400 zum Formen gegen eine Kontaktfläche 328 einer zweiten beweglichen Platte 320 des zweiten stationären Werkzeugteils 300 gedrückt. In der Initialstellung besteht ein Abstand zwischen der ersten beweglichen Platte 220 und dem ersten Werkzeugkörper 210.

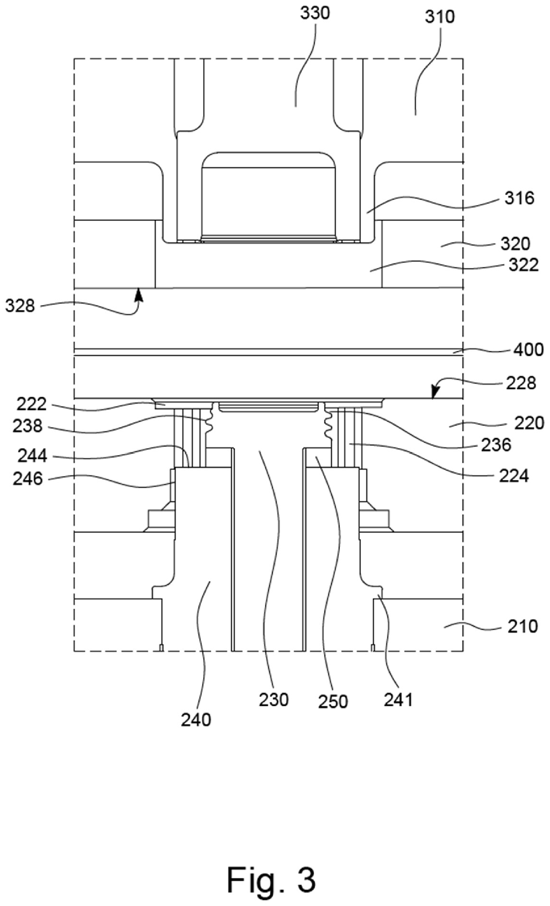

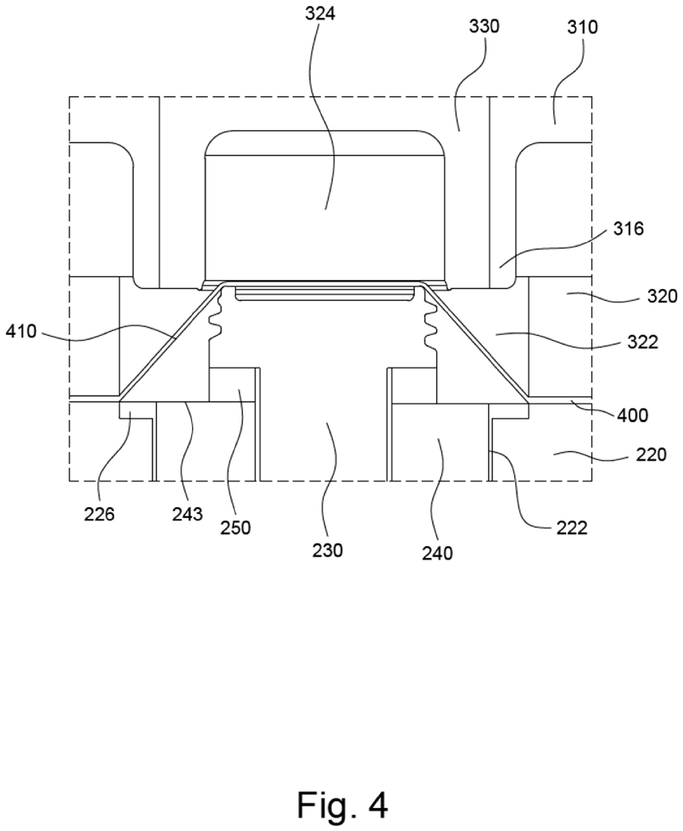

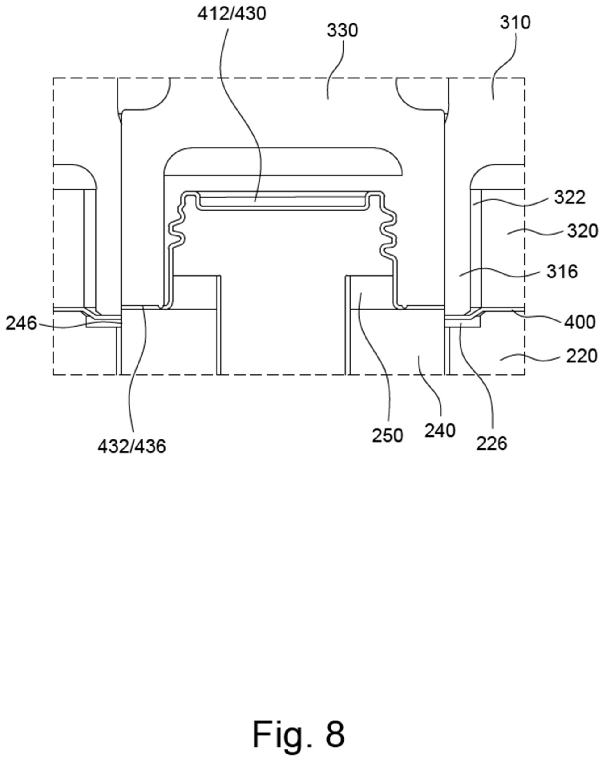

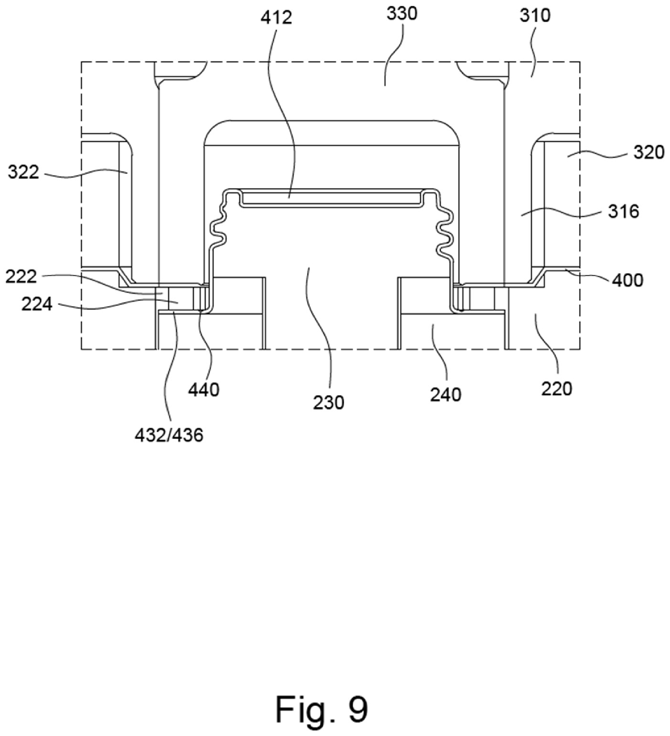

Der zweite Werkzeugteil 300 weist einen Werkzeugkörper 310 auf. Der Werkzeugkörper 310 weist Aufnahmen 312 auf. In den Aufnahmen 312 ist jeweils ein Niederhalter 330 aufgenommen. Über die Stanzkontur 314 in den Aufnahmen 312 ist der Niederhalter 330 geführt. Oberhalb des Bereichs mit der Stanzkontur 314 weist die Aufnahme 312 einen Abschnitt mit einem reduzierten Querschnitt auf. Darin ist ein zylindrischer Abschnitt des Niederhalters 330 aufgenommen. Der Niederhalter 330 kann entlang der Stanzkontur 314 in der Aufnahme 312 aus einer Initialstellung (siehe Fig. 3, 4) in eine Formstellung (Fig. 8, 9) verbracht werden.

Das Stanzwerkzeug 316 ist in der gezeigten Ausführungsform als integraler Bestandteil des Werkzeugkörpers 310 ausgebildet. In weiteren Ausführungen kann das Stanzwerkzeug 316 ein separates Bauteil sein. Das Stanzwerkzeug 316 weist an seiner Unterseite die Stanzkontur 314 auf.

Der Niederhalter 330 ist ausgebildet, dass er in einen Formraum 324 bewegt werden kann und in seiner Formstellung einen Formraum 324 umgibt. Der Formraum im Niederhalter 330 ist von einer Seitenwand des Niederhalters 330 umgeben. Die Seitenwand weist einen ersten Formrand 332 an einer Unterseite 336 auf. Dort kann eine dritte Formkontur 334 ausgebildet sein, wobei eine dritte Formkontur 334 Vertiefungen aufweisen kann. Damit ist es in weiteren Ausführungen möglich, zwischen der zweiten Formkontur 248 und der dritten Formkontur 334 Flaps 436 mit Prägungen zur Ausbildung von Widerhaken in der Formstellung des Niederhalters 330 zu formen.

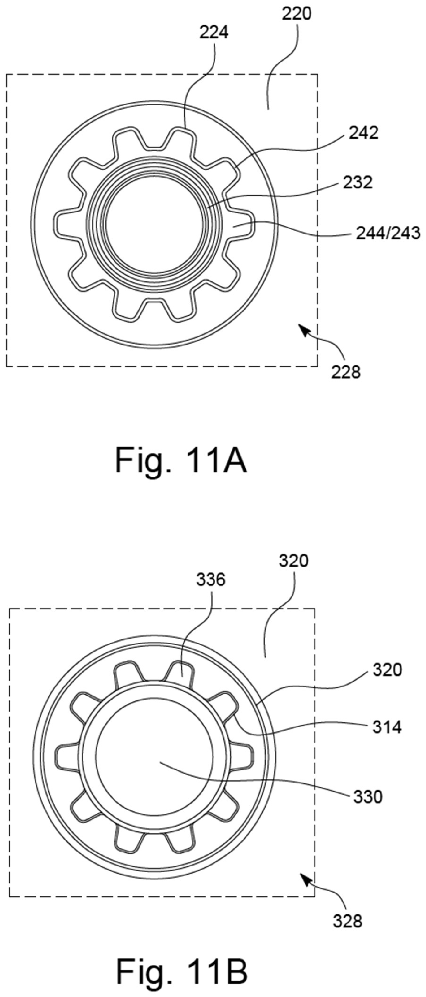

Der Niederhalter 330 weist eine Außenkontur 339 auf, welche der Außenkontur 242 des Schneidstempels 240 entspricht. In der Formstellung des Niederhalters 300 wird das Folienmaterial 400 zwischen dem Schneidstempel 240 und dem Niederhalter 300 geklemmt. Bereiche des Folienmaterials 400 außerhalb und abseits der Außenkonturen 242, 339 können dann in einem Stanzhub durch eine relative Verlagerung des Stanzwerkzeugs 316 entlang der Seitenfläche 246 abgeschert werden. Die Stanzkontur 314 greift dabei in die Außenkonturen 242, 339 ein, wie bspw. in Fig. 11 dargestellt.

Der zweite Werkzeugteil 300 weist eine zweite bewegliche Platte 320 mit einer Vielzahl an zweiten Öffnungen 332 auf. Über die zweite Öffnung 332 ist das Stanzwerkzeug 316 relativ zur zweiten beweglichen Platte 320 verlagerbar. Dazu besteht in einer Initialstellung ein Abstand zwischen der zweiten beweglichen Platte 320 und dem zweiten Werkzeugkörper 310.

Die relative Verlagerung des ersten Werkzeugteils 200 und des zweiten Werkzeugteils zueinander sowie die Verlagerung der beweglichen Platten 220, 320 relativ zu den ihnen zugehörigen Werkzeugkörpern 210, 310 kann durch eine Zwangssteuerung nach Maßgabe der Verlagerung des ersten Werkzeugkörpers 210 in Kombination mit beweglichen Platten 220, 320, die über Federeinrichtungen gegenüber den ihnen zugeordneten Werkzeugkörpern 210, 310 vorgespannt sein können, erfolgen. In weiteren Ausführungen kann die relative Verlagerung zwischen den beweglichen Platten 220, 320 und den ihnen zugeordneten Werkzeugkörpern 210, 310 über bspw. pneumatisch ansteuerbare Elemente erfolgen, wobei durch Zu- und Abfuhr eines Gases oder Gasgemisches die Verlagerung gesteuert wird. In weiteren Ausführungen können solche ansteuerbaren Elemente als "pneumatische" Federn ausgebildet sein, wobei je nach Gasdruck eine Verlagerung (zusätzlich) gedämpft werden kann. D.h. eine Verringerung des Abstands zwischen einer beweglichen Platte 220, 320 und des zugeordneten Werkzeugkörpers 210, 310 erfordert - wie bei einer konventionellen Feder - eine Mindestkraft, welche bspw. dadurch bereitgestellt werden kann, wenn eine der beweglichen Platten 220, 320 auf Anschlag mit dem zugeordneten Werkzeugkörper 210, 310 ist. In noch weiteren Ausführungen kann bspw. die "Federhärte" einer pneumatischen Feder verändert werden, um die Verlagerung hierüber zu beeinflussen. Bspw. können dabei pneumatische Federn zwischen einer beweglichen Platte 220 und ihrem Werkzeugkörper 210 verschieden zu den pneumatischen Federn zwischen einer beweglichen Platte 320 und ihrem Werkzeugkörper 310 angesteuert werden und somit die erforderliche Kraft zur Verlagerung beeinflussen. In weiteren Ausführungen kann mindestens eine relative Bewegung durch einen separaten Antrieb erfolgen, der bspw. nur für eine gemeinsame Verlagerung der Niederhalter 330 vorgesehen ist. In weiteren Ausführungen kann eine gemeinsame Rotation der Formeinsätze 230 zum Entformen der Formteile 412 über einen separaten Antrieb erfolgen.

Fig. 11 zeigt weitere Darstellungen des Formwerkzeugs 100 mit Blick auf die Kontaktflächen 228, 328. Fig. 11a) zeigt den Blick von unten auf den zweiten Werkzeugteil 300. Fig. 11b) zeigt den Blick oben auf den ersten Werkzeugteil 200. In den Darstellungen ist gezeigt, wie die Konturen 224, 339, 242 ausgebildet sind, so dass ein Stanzen eines Formteilrands 432 und eine Verdrehsicherung beim Entformen gewährleistet werden können.

Nachfolgend wird der Formprozess mit Bezug auf die Fig. 3-10 erläutert, wobei schematische Darstellungen eines Ausschnitts des Formwerkzeugs 100 während des Formens eines Formteils 412 gezeigt sind.

In Bezug auf die nachfolgenden Prozessschritte wird auf die beispielhafte Ausführung des Formwerkzeugs 100 verwiesen, welches mit Bezug auf Fig. 2 beschrieben ist. In den Fig. 3 bis 10 ist ein beispielhafter Schnitt durch das Formwerkzeug 100 gezeigt.

Zunächst wird ein Folienmaterial 400, bspw. ein PET-Material, mit einer Folienstärke von 0,7 bis 1,0 mm, vorzugsweise 0,8 - 0,9 mm, bspw. mit etwa 0,86 mm, zwischen das erste Werkzeugteil 200 und das zweite Werkzeugteil 300 eingebracht (Fig. 3). Das Einbringen kann über einen Materialbogen oder endlos von einer Rolle erfolgen. Vor der Zufuhr des Folienmaterials 400 zwischen den ersten Werkzeugteil 200 und den zweiten Werkzeugteil 300 kann das Folienmaterial 400 vorgeheizt werden. Hierzu kann eine Heizstation einer Formstation mit einem Formwerkzeug 100 vorgelagert sein und die Heizstation kann Bestandteil einer Thermoformanlage sein. In weiteren Ausführungen kann eine Heizstation eine separate Anlage sein, die unabhängig von einer Thermoformanlage angeordnet und ausgebildet ist.

Die Komponenten der ersten Werkzeughälfte bzw. des ersten Werkzeugteils 200 und die Komponenten der zweiten Werkzeughälfte bzw. des zweiten Werkzeugteils 300 befinden sich dabei noch in der Initialstellung. In der Initialstellung überragt die Formfläche 236 des Formeinsatzes 230 bzw. die Formkontur 232 eine durch die Kontaktfläche 228 definierte Ebene nicht. Das Stanzwerkzeug 316 und der Niederhalter 330 befinden sich in der Initialstellung in einer zurückgezogenen Position, wie in Fig. 3 schematisch gezeigt.

Anschließend werden der erste Werkzeugteil 200 und der zweite Werkzeugteil 300 relativ zueinander verfahren. In der gezeigten Ausführungsform, wobei das Formwerkzeug 100 als Kippwerkzeug einer Kippmaschine ausgebildet ist ("trim in place"), wird zur relativen Verlagerung nur das untere erste Werkzeugteil 200 nach oben gegen das zweite stationäre Werkzeugteil 300 bewegt. Die Verlagerung erfolgt so weit, bis das Folienmaterial 400 zwischen den Kontaktflächen 228, 328 der ersten beweglichen Platte 220 und der zweiten beweglichen Platte 320 geklemmt wird. Eine Verlagerung der beweglichen Platten 220 320 gegenüber den Werkzeugkörpern 210, 310 erfolgt dabei noch nicht. Ein Bereich des Folienmaterials 400 wird damit in einem Formbereich zwischen den Öffnungen 222, 322 gehalten.

Es erfolgt dann eine weitere Verlagerung des ersten Werkzeugkörpers 210, wobei der Abstand zwischen dem ersten Werkzeugkörper 210 und der ersten beweglichen Platte 220 verringert wird. Dadurch wird der Formeinsatz 230 in den Formbereich bewegt. Die Formkontur 232 drückt dabei das Folienmaterial 400 nach oben in einen Formraum 324.

Die Verlagerung des ersten Werkzeugkörpers 210 nach oben gegen den zweiten Werkzeugteil 300 erfolgt solange, bis die zweite Formfläche 243 des Schneidstempels 240 sich im Wesentlichen auf Höhe der Kontaktfläche 228 befindet (Fig. 4). Das Folienmaterial 400 ist dann maximal gestreckt. Die zweite Öffnung 322 ist so ausgebildet, dass das Folienmaterial 400 über den Formeinsatz 230 und die Formkontur 232 gestreckt werden kann, ohne dass das Folienmaterial 400 in Kontakt mit einer Seitenwand der Öffnung 322 kommt. Damit wird ein Abkühlen des vorab erwärmten Folienmaterials 400 über den zweiten Werkzeugteil 200 verhindert, so dass das Folienmaterial 400 leicht streckbar ist. Wie in den Figuren gezeigt, gibt es nur wenige und kleinflächige Kontaktstellen zwischen der Formfläche 236 und dem Folienmaterial 400, so dass es zu keinem oder nur einem geringen Abkühlen des Folienmaterials 400 kommt. Somit kann ein Strecken des Folienmaterials 400 erreicht werden, wobei die Materialstärke des Folienmaterials 400 nur geringfügig abnimmt. So kann bspw. ein Folienmaterial 400 mit einer Ausgangsmaterialstärke von etwa 0,86 mm nach dem Strecken (Fig. 4) eine Materialstärke in den schräg verlaufenden Seitenbereichen von etwa 0,5 mm und im oberen Bereich, welcher später einen zentralen Deckelabschnitt 434 bildet, von 0,6 bis 0,75 mm aufweisen.

Gegenüber bekannten Maßnahmen aus dem Stand der Technik, wobei ein Vorstrecken mittels Streckhelfern erfolgt, welche im Wesentlichen vollflächig mit einem Folienmaterial in Kontakt treten, wird eine erhebliche Verbesserung erzielt, weil die Folienstärke (Ausgangsstärke 0,86 mm) im Stand der Technik nach dem Vorstrecken in der Regel nur 0,3 mm beträgt. Die wesentliche Verbesserung der Materialstärke bei der hier vorgestellten Lösung wird durch das Strecken erreicht, wobei nur ein geringer Kontakt zwischen der Formfläche 236 und dem Folienmaterial 400 besteht.

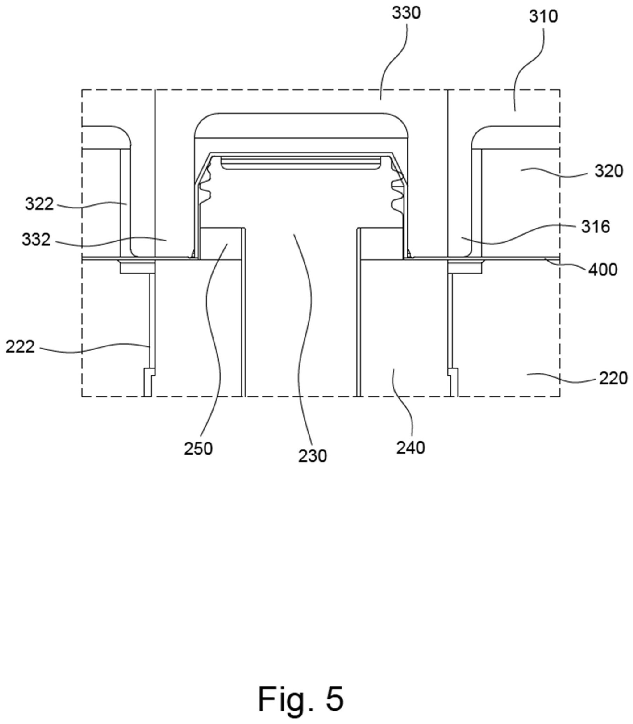

Bei einer weiteren Verlagerung des ersten Werkzeugkörpers 210 wird der Abstand des ersten Werkzeugkörpers 210 gegenüber der ersten beweglichen Platte 220 weiter reduziert, so dass eine umlaufende Schnittkante zwischen der Seitenfläche 246 und der zweiten Formfläche 243 des Schneidstempels 240 das Folienmaterial 400 gegen eine korrespondierende Schnittkante der Stanzkontur 314 drückt (Fig. 5). Zudem wird die zweite bewegliche Platte 320 bei weiterer Verlagerung des ersten Werkzeugkörpers 210 zunehmend gegen den zweiten Werkzeugkörper 310 gedrückt, so dass das Stanzwerkzeug 316 in den Formraum 324 gelangt und das Folienmaterial 400 gegen die Schnittkante des Schneidstempels 240 drückt. Dabei erfolgt ein Vorstanzen des Folienmaterials 400. Dies kann bspw. vor dem Erzeugen eines Druckunterschieds im Formraum 324 erfolgen.

Anschließend erfolgt ein Ansaugen des gestreckten Folienmaterials 410 über Öffnungen an der Formfläche 236 und im Formeinsatz 230 verlaufende Kanäle. Hierzu sind die Öffnungen an der Formfläche 236 mit einer Ansaugeinrichtung zum Erzeugen eines Vakuums verbunden. Das gestreckte Folienmaterial 410 legt sich dadurch an die Formfläche 236 und wird dabei vorgeformt. Das Folienmaterial 410 bildet dann bereits im Wesentlichen die Geometrie eines Deckels 430 bzw. des Formteils 412 aus.

Zusätzlich kann ein Unterdruck zum Ansaugen des Folienmaterials 410 auch über Öffnungen im Mittelstück 250 und Öffnungen an der zweiten Formfläche 243 des Schneidstempels 240 erfolgen. Zumindest die Formkontur 232 wird indirekt gekühlt, so dass das Folienmaterial 400 an der Formfläche 236 abkühlen kann. Hierzu ist ein unterer Abschnitt des Formeinsatzes 230 mit einer Einrichtung zum indirekten Kühlen thermisch gekoppelt.

In weiteren Ausführungen kann das Erzeugen von Unterdruck zum Ansaugen des Folienmaterials 400 bereits nach dem Strecken und vor dem Vorstanzen erfolgen. In noch weiteren Ausführungen kann das Erzeugen von Unterdruck zum Ansaugen des Folienmaterials 400 erfolgen, bevor das Folienmaterial 400 maximal gestreckt wurde. Jedoch wird ein Unterdruck bzw. Vakuum zum Ansaugen des Folienmaterials 400 in der Regel erst dann wirksam, wenn die untere bewegliche Platte 220 auf Anschlag mit dem Werkzeugkörper 210 ist, da dann ein Formraum zwischen den Formflächen 236, 243 und Folienmaterial 400 vollständig geschlossen ist. In weiteren Ausführungen können zum dichten Verschließen dieses Formraums Dichtelemente an und zwischen den beweglichen Komponenten vorgesehen sein. Bspw. können Dichtelemente bspw. mindestens zwischen der beweglichen Platte 220 und dem Werkzeugkörper 210 vorgesehen sein. Gegenüber der beweglichen Platte 320 und dem Werkzeugkörper 310 kann in weiteren Ausführungen eine Abdichtung über das Folienmaterial 400 erfolgen.

Die Verlagerung des ersten Werkzeugkörpers 210 nach oben erfolgt solange, bis ein Mindestabstand zwischen der zweiten beweglichen Platte 320 und des zweiten Werkzeugkörpers 310 zur Ausführung eines Stanzhubs nach dem finalen Formen des Formteils 412 besteht.

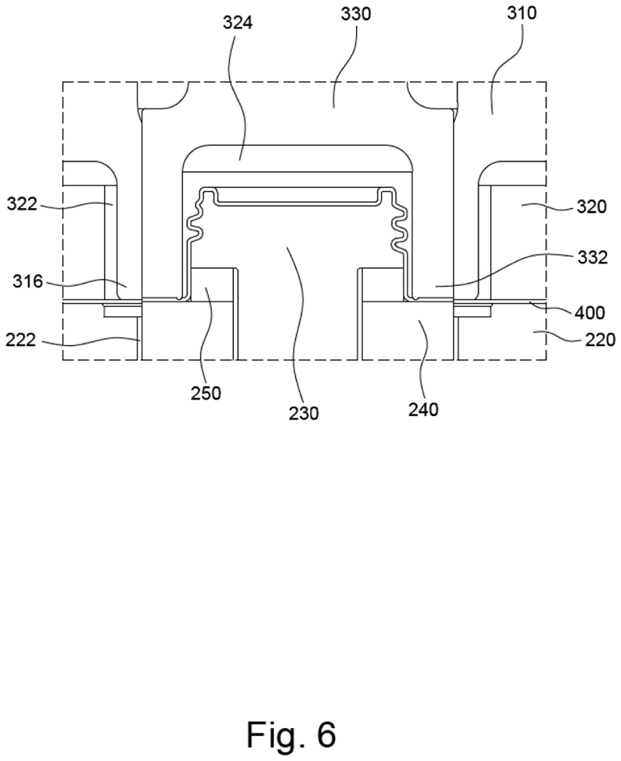

Es erfolgt nach dem Beginn des Ansaugens des gestreckten Folienmaterials 410 auch ein Erzeugen von Überdruck im Formraum 324 über Öffnungen in der inneren Oberfläche des Niederhalters 330. Dadurch kann ein finales Formen durch einen Druckunterschied erreicht werden. Hierzu weist der Niederhalter 330 Kanäle auf, wobei die Öffnungen an der inneren Oberfläche des Niederhalters 330 mit einer Einrichtung zum Einbringen von Druckluft in Verbindung stehen. Das Einbringen von Druckluft kann bereits beim Vorstanzen erfolgen. In weiteren Ausführungen erfolgt das Einbringen von Druckluft nach dem Vorstanzen. Das Einbringen von Druckluft erfolgt in der Regel zumindest bevor der Niederhalter 330 die in Fig. 6 gezeigte Formstellung erreicht hat, wobei analog zu den Ausführungen zum Erzeugen eines Vakuums die Wirksamkeit des Überdrucks davon abhängen kann, ob ein weiterer Formraum geschlossen ist. Daher können auch hierfür weitere Dichtelemente vorgesehen sein.

In noch weiteren Ausführungen kann nur ein Erzeugen von Unterdruck über den Formeinsatz oder ein Einbringen von Druckluft zum Formen von Formteilen 412 nach einem Strecken eines Folienmaterials 400 erfolgen.

Nachdem das Formteil 412 durch das Strecken und den Druckunterschied geformt wurde, wird der Niederhalter 330 über einen separaten Antrieb nach unten gefahren, bis der Niederhalter 330 die in Fig. 6 gezeigte Formstellung oder Formposition erreicht hat. Ein Formteilrand 432 des Folienmaterial 400 wird dabei zwischen der zweiten Formfläche 243 des Schneidstempels 240 und der Formfläche der dritten Formkontur 334 des Niederhalters 330 umgeformt, wobei in weiteren Ausführungen zusätzlich ein Formen von Prägungen bzw. Erhebungen erfolgen kann. Zudem können bei der Verlagerung des Niederhalters 330 nach unten vertikale Rillen 438 an der Außenseite des Formteils 412 eingebracht werden. Hierzu weist der Niederhalter 330 an der inneren Oberfläche im Bereich des Formraums 324 vertikal verlaufende Erhebungen auf.

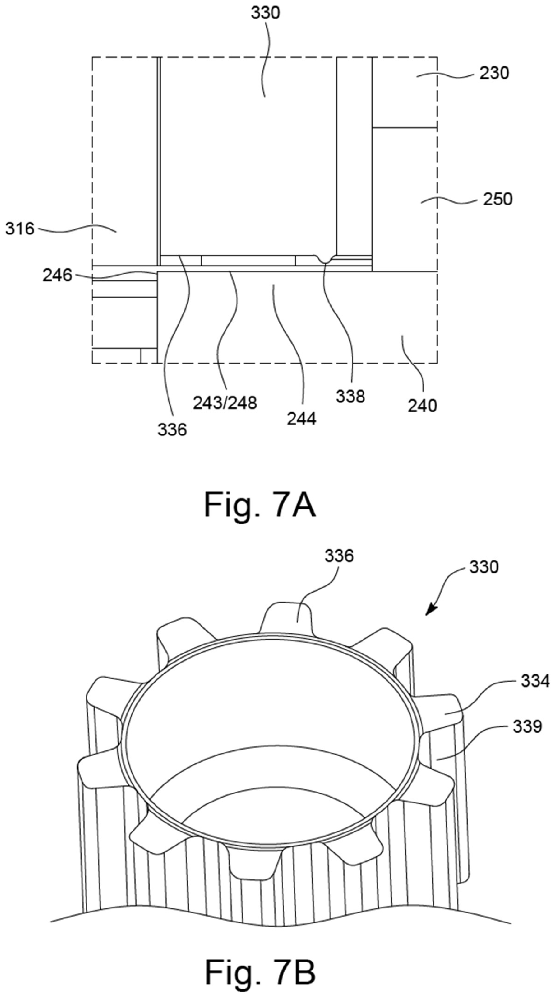

Fig. 7 zeigt in verschiedenen Darstellungen die Ausbildung des Formteilrands 432 durch den Niederhalter 330. Fig. 7a) zeigt in vergrößerter Darstellung den Formbereich zum Prägen zwischen der zweiten Formfläche 243 und der Formfläche der dritten Formkontur 334. In der gezeigten Ausführungsform weist der Niederhalter 330 an der Unterseite 336 einen nach unten ragenden Ring 338 auf, welcher im Formteilrand 432 eine umlaufende Rinne 440 erzeugt. Die Rinne 440 kann später als Biegestelle zum Umklappen (> 180 Grad) der Flaps 436 dienen, ohne dass das Formteil 412 dabei Schaden nimmt.

Fig. 7b) zeigt die Ausbildung der Unterseite 336 des Niederhalters 330.

Nach der finalen Ausbildung des Formteils 412 wird ein Stanzhub durchgeführt, wobei die erste bewegliche Platte 220 die zweite bewegliche Platte 320 nach oben drückt. Dabei wird das Folienmaterial 400 zwischen der Schnittkante des Schneidstempels 240 und der Schnittkante der Stanzkontur 314 abgeschert (Fig. 8), weil das Stanzwerkzeug 316 in die erste Öffnung 222 eintaucht. Die erste Öffnung 222 weist hierzu einen Stanzraum 226 auf, der einen Eintritt der Schnittkante des Stanzwerkzeugs 316 erlaubt. Die zweite bewegliche Platte 320 wird während des Stanzhubs um ein geringes Maß in Richtung des zweiten Werkzeugkörpers 310 verlagert. Das Folienmaterial 400 und insbesondere der Formteilrand 432 mit den Flaps 436 wird während des Stanzhubs sicher zwischen den Formflächen 243 und der Formfläche der dritten Formkontur 334 gehalten.

Nach dem Formen beginnt das Entformen. Dazu kann in weiteren Ausführungen zunächst der Niederhalter 330 zurück in seine Initialstellung verbracht und dazu nach oben verlagert werden. Dies kann bspw. über den separaten Antrieb für die Niederhalter 330 erfolgen, die bspw. über Druckluft gesteuert werden.

Anschließend wird die zweite bewegliche Platte 320 nach oben bewegt und die erste bewegliche Platte 220 folgt dieser Bewegung. Zugleich wird der erste Werkzeugkörper 210 mitsamt dem Schneidstempel 240 und dem Formeinsatz 230 nach unten bewegt, wobei das gefertigte Formteil 412 aus dem restlichen Folienmaterial 400 heraus- und nach unten bewegt wird (Fig. 9). Dabei gelangen die Flaps 436 in die Kontur 224 der ersten Öffnung 222. Dies ist insoweit wichtig, damit bei einem nachfolgenden Rotieren des Formeinsatzes 230 die Ausrichtung des Formteils 412 nicht verändert wird.

Danach wird der Formeinsatz 230 so rotiert, dass die Formkontur 232 aus dem Formteil 412 herausgedreht wird. Dies ist nur deshalb möglich, weil der Formeinsatz 230 rotiert werden kann, ohne dass es zu einer Rotation des Formteils 412 kommt. Dies wird dadurch erreicht, dass die abstehenden Flaps 436 in der Kontur 224 gehalten werden (siehe hierzu Fig. 11).

In weiteren Ausführungen kann die Verlagerung der beweglichen Platten 220, 320 und des ersten Werkzeugkörpers 210 auch anderweitig abgestimmt sein, solange die Verlagerung ein Entformen des Formteils 412 gewährleistet und dabei die Flaps 436 in die Kontur 224 der ersten Öffnung 222 gelangen, um eine Rotation des Formeinsatzes 230 zu ermöglichen, ohne dass es zu einer Rotation des Formteils 412 kommt.

Die Rotation des Formeinsatzes 230 kann dabei zweistufig erfolgen. Zunächst kann der Formeinsatz 230 soweit rotiert werden, dass das Formteil 412 im Wesentlichen zu 90% entformt wird.

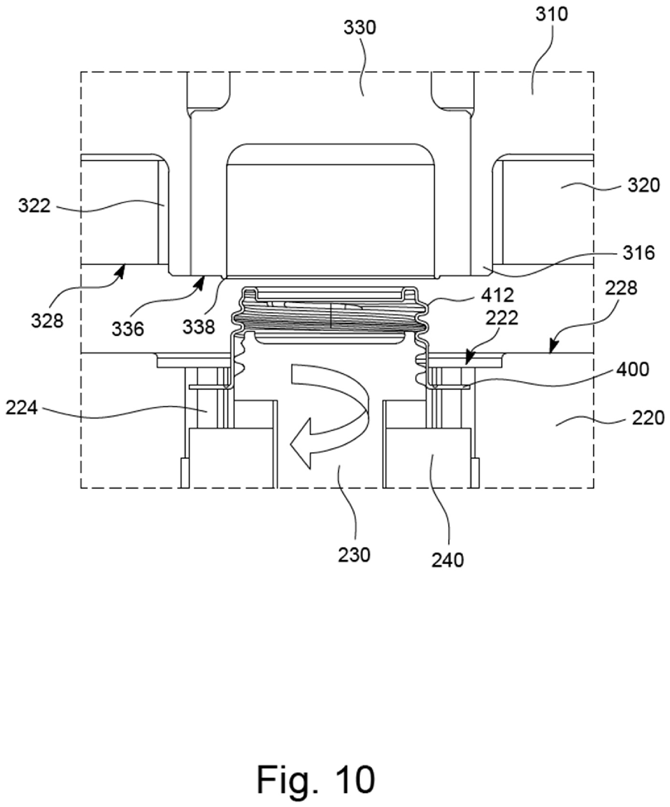

Danach werden die zweite bewegliche Platte 320 und die erste bewegliche Platte 220 jeweils nach unten bewegt, wobei das restliche Folienmaterial 400 zwischen den Kontaktflächen 228, 328 gehalten bleiben kann. Zudem wird der untere erste Werkzeugkörper 210 mitsamt dem Schneidstempel 240 und dem Formeinsatz 230 nach unten bewegt (Fig. 10). Die Bewegung wird fortgesetzt, bis der erste Werkzeugteil 200 und der zweite Werkzeugteil 300 zueinander beabstandet sind. Danach erfolgt ein Rotieren des ersten Werkzeugteils 200 um die Drehachse D. Danach erfolgt nochmals ein Rotieren des Formeinsatzes 230, so dass das Formteil 412 nicht mehr über den Gewindeabschnitt 238 des Formeinsatzes 230 gehalten wird und in der geneigten Position der ersten Werkzeughälfte bzw. des ersten Werkzeugteils 200 über ein Entnahmewerkzeug entnommen werden kann. Anschließend kann der erste Werkzeugteil 200 wieder rotiert und in seine Ausgangsstellung verbracht werden und der Formprozess kann erneut durchlaufen werden.

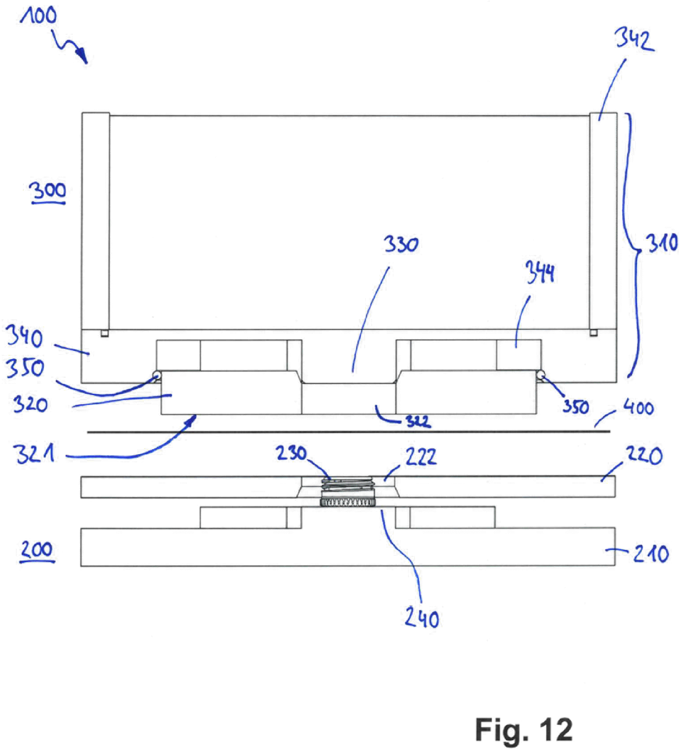

Die Fig. 12-15 zeigen schematische Darstellungen eines Ausschnitts eines Formwerkzeugs 100 einer weiteren Ausführungsform während des Formens eines Formteils 412 und der Formschritte eines Verfahrens zum Formen in der weiteren Ausführungsform. Im Wesentlichen unterscheidet sich die in den Figuren 12 bis 15 gezeigte zweite Ausführungsform von der in den Fig. 2 bis 11 gezeigten ersten Ausführungsform darin, dass mindestens ein Dichtelement vorgesehen ist, wie vorstehend in Bezug auf die erste Ausführungsform angegeben, und dass das Erzeugen eines Druckunterschieds durch Einbringen von Druckluft und/oder ein Erzeugen eines Unterdrucks erfolgt, bevor die geschlossene Formstellung erreicht worden ist.

Es wird daher für die zweite Ausführung der Fig. 12 bis 15 auf die erste Ausführungsform Bezug genommen und auf die Ausführungen dazu verwiesen. Insbesondere wird für gleiche Komponenten auf die Ausführungen der ersten Ausführungsform verwiesen, sofern diese sich technisch nicht widersprechen.

Bei der zweiten Ausführungsform befindet sich zwischen der zweiten bewegliche Platte 320, welche als zweite Klemmeinrichtung dient, und einer Werkzeugplatte 340 eine Dichtung 350. Die Werkzeugplatte 340 bildet zusammen mit einer Druckglocke 342 Teil des zweiten Werkzeugkörpers 310, wobei in der zweiten Ausführungsform nur ein Teilbereich des Formwerkzeugs 100 gezeigt ist. Daher kann ein Formwerkzeug 100 auch mehrere Formbereiche aufweisen, die jeweils eine Druckglocke 342 und Dichtungen 350 für jeden Formbereich aufweisen. Ein Formbereich ist durch den Bereich definiert, in welchem ein Formteil 412 über einen Formeinsatz 230 geformt wird. Die vorstehende Definition eines Formbereichs der ersten Ausführungsform zwischen den Öffnungen 222, 232 gilt dabei weiterhin.

In den Fig. 12 bis 15 ist die zweite bewegliche Platte 320 nur für einen Formbereich dargestellt. Jedoch kann sich eine zweite bewegliche Platte 320 über den dargestellten Formbereich hinaus erstrecken und in weiteren Formenbereichen analog zu der dargestellten Ausbildung der Fig. 12 bis 15 ausgebildet sein, wobei auch dort Dichtungen 350 je Formbereich zwischen der zweiten beweglichen Platte 320 bzw. zwischen einem Abschnitt 321 der zweiten beweglichen Platte 320 und einer Werkzeugplatte 340 angeordnet sind.

In der zweiten Ausführungsform ist die Dichtung 350 an der Werkzeugplatte 340 angeordnet und liegt dichtend an einem äußeren oberen Ende eines Bereichs des entsprechenden Abschnitts 321 der zweiten beweglichen Platte 320 an. Bei der relativen Verlagerung der zweiten beweglichen Platte 320 gegenüber der Werkzeugplatte 340 ist damit stets eine Dichtung zwischen der zweiten beweglichen Platte 320 und der Werkzeugplatte 340 im Bereich einer Aufnahme 344 für den Abschnitt 321 der zweiten beweglichen Platte 320 gegeben.

Die Werkzeugplatte 340 weist in der gezeigten Ausführungsform den Niederhalter 330 auf, über den eine Verbindung zwischen dem Formraum und der Druckglocke 342 zum Erzeugen von Überdruck bereitgestellt werden kann. Der Niederhalter 330 ist in der zweiten Öffnung 322 in Anlage mit der zweiten beweglichen Platte 320, sodass hierüber bereits eine Dichtung erreicht werden kann. Ferner ist eine Dichtung darüber bereitgestellt, wobei die Aufnahme 344 seitlich über die Dichtungen 350 abgedichtet ist, so dass kein Entweichen von Druckluft erfolgen kann, sobald die zweite bewegliche Platte 320 mit ihrer Kontaktfläche 328 die Folie bzw. das Folienmaterial 400 klemmt. Das Klemmen wird dann erreicht, wenn die zweite bewegliche Platte 320 mit der ersten beweglichen Platte 220 in Kontakt steht beziehungsweise das Folienmaterial 400 zwischen den beiden Kontaktflächen 328 und 228 geklemmt wird. In diesem Zustand hat das Formwerkzeug 100 noch nicht die geschlossene Formstellung erreicht, weil eine weitere relative Verlagerung der beiden Werkzeugteile 200, 300 erfolgen kann, wobei insbesondere die zweite bewegliche Platte 320 relativ zur Werkzeugplatte 340 verlagerbar ist. Vorteilhafterweise kann aber bereits nach oder beim Erreichen der Klemmstellung zum Klemmen des Folienmaterials 400 zwischen der Kontaktfläche 228 und der Kontaktfläche 328 ein Einbringen von Überdruck und/oder ein Erzeugen von Vakuum, beispielsweise über den Formeinsatz 230, erfolgen, so dass der Formprozess frühzeitig gestartet und die Formung verbessert werden kann.

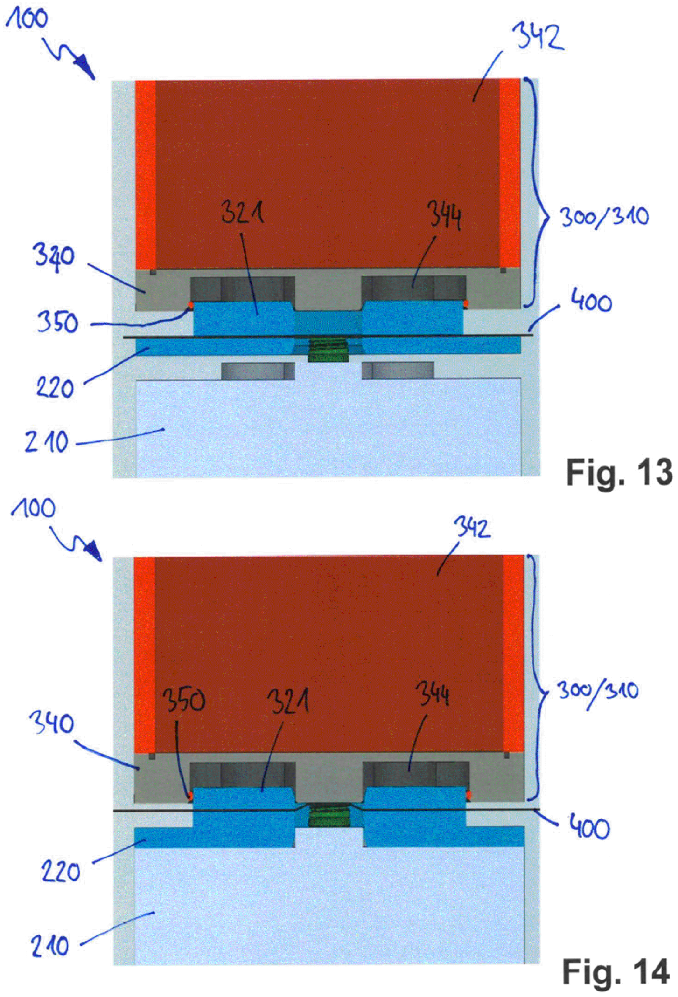

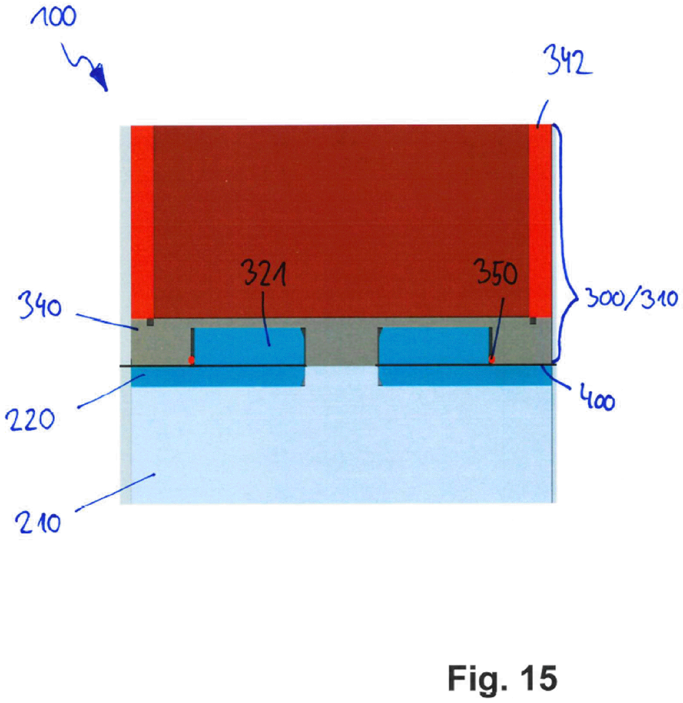

Fig. 13 zeigt die Klemmstellung wobei das Folienmaterial 400 zwischen den Kontaktflächen 228, 328 geklemmt ist. Fig. 14 zeigt einen Zustand, in welchem der untere erste Werkzeugkörper 210 gegenüber dem Zustand aus Fig. 13 weiterverlagert worden ist, so dass die erste bewegliche Platte 220 in Anlage mit dem ersten Werkzeugkörper 210 kommt und der Formeinsatz 230 das Folienmaterial 400 im Formbereich teilweise streckt. Fig. 15 zeigt die geschlossene Formstellung.

Bei der zweiten Ausführungsform kann in weiteren Ausführungen das Einbringen von Druckluft über die Druckglocke 342 oder das Erzeugen von Vakuum über den Formeinsatz 230 erfolgen, bevor die Formstellung (Fig. 15) erreicht worden ist. In noch weiteren Ausführungen kann sowohl ein Einbringen von Druckluft als auch ein Erzeugen eines Vakuums erfolgen. In noch weiteren Ausführungen können die eingebrachte Druckluft und/oder das erzeugte Vakuum während des gesamten Prozesses verändert werden. Üblicherweise erfolgt die Erzeugung einer Druckdifferenz im Bereich von 1 bar bis 15 bar, vorzugsweise von 1 bar bis 10 bar, mehr bevorzugt zwischen 3 bar und 6 bar. Bspw. kann eine Druckdifferenz bei etwa 4 bar liegen.

Die Darstellung der Druckglocke 342 und der Werkzeugplatte 340 sind schematisch und können in weiteren Ausführungen vom gezeigten Modell abweichen.

Die erforderliche Abdichtung hierzu wird über die Dichtung 350 erreicht. Die Dichtung 350 kann bspw. aus einem Silikon, einem Elastomer oder einem anderen geeigneten Material bestehen. In weiteren Ausführungen kann eine Dichtung auch am Formwerkzeug 100 so angeordnet sein, dass bspw. umlaufend alle Formbereiche von einer Dichtung umgeben sind. In noch weiteren Ausführungen kann die mindestens eine Dichtung 350 auch an einem Abschnitt 321 der zweiten beweglichen Platte 320 angeordnet sein. In noch weiteren Ausführungen können anstelle einer Dichtung 350 auch mehrere Dichtungen 350 vorgesehen sein, wobei auch die Dichtungen 350 in noch weiteren Ausführungen an den gegenüberliegenden Flächen angeordnet sind, so dass mindestens eine Dichtung 350 an der Werkzeugplatte 340 und mindestens eine Dichtung 350 an dem Abschnitt 321 bzw. der zweiten beweglichen Platte 320 angeordnet ist.

Die mindestens eine Dichtung 350 kann in noch weiteren Ausführungen als O-Ring, als umlaufende Dichtlippe oder dergleichen ausgebildet sein.

In weiteren Ausführungen kann ein Einbringen von Druckluft und/oder ein Erzeugen eines Vakuums in den beschriebenen Ausführungen erfolgen, wenn der Klemmzustand erreicht ist (Fig. 13) oder wenn die erste bewegliche Platte 220 in Anlage mit dem ersten Werkzeugkörper 210 kommt bzw. ist (Fig. 14). In der Stellung von Fig. 14 ist der geschlossene Formzustand noch nicht erreicht, weil die zweite bewegliche Platte 320 noch nicht in Anlage mit dem zweiten Werkzeugkörper 310 steht.

Wie vorstehend beschrieben, kann die Ansteuerung der beweglichen Komponenten des Formwerkzeugs 100 durch gemeinsame Antriebe und separate Antriebe erfolgen. Bspw. kann eine parallele Verlagerung und ein Schwenken zum Auswerfen von Formteilen 412 des ersten Werkzeugteils 200, insbesondere des ersten Werkzeugkörpers 210, über einen Antrieb erfolgen, der über Kurvenscheiben gesteuert wird. Zusätzlich können elektrische, pneumatische, hydraulische, etc. Antriebe vorgesehen sein, welche Gruppen von Komponenten zum Ausführen der vorstehend beschriebenen Bewegungen betätigen.

Die beschriebene Ausführung ermöglicht das Formen von komplexen Formteilen 412 in einem Thermoformprozess in einer Thermoformanlage mit einem Thermoformwerkzeug, insbesondere in einer sogenannten Kippmaschine, wobei die Nachteile hinsichtlich der Materialstärke und damit der Ausbildung von Funktionselementen (Gewinde) in Formteilen 412 mit ausreichender Zuverlässigkeit bei sehr hohen Anforderungen an die Maßhaltigkeit erreicht werden kann.

Soweit hierin Begriffe zur Beschreibung der technischen Lehre verwendet werden, sind diese Begriffe, sofern sich aus dem technischen Zusammenhang nicht zwingend etwas anderes ergibt, nicht einschränkend zu verstehen, sondern in einem breiten technischen Sinn auszulegen. Dies gilt insbesondere für die nachfolgend erläuterten Begriffe.

Der Begriff "Thermoformen" bezeichnet hierin insbesondere ein Umformen eines Folienmaterials in einem erwärmten, vorgewärmten, thermisch konditionierten oder thermisch umformbaren Zustand. Das Erwärmen oder Vorwärmen des Folienmaterials kann vor dem Einbringen in das Formwerkzeug, in einer dem Formwerkzeug vorgelagerten Heizstation, innerhalb einer Thermoformanlage und/oder auf andere geeignete Weise erfolgen. Das Thermoformen kann insbesondere durch eine Relativbewegung von Werkzeugteilen, durch mechanisches Strecken, durch einen Druckunterschied, durch Druckluft, durch Unterdruck bzw. Vakuum oder durch eine Kombination hiervon unterstützt oder bewirkt werden.

Der Begriff "Folienmaterial" bezeichnet hierin insbesondere ein flächiges, bahnförmiges, bogenförmiges oder plattenähnliches Ausgangsmaterial, das zum Thermoformen geeignet ist. Das Folienmaterial kann insbesondere ein Kunststoffmaterial, ein PET-Material, ein mehrschichtiges Material, ein Verbundmaterial, ein beschichtetes Material oder ein anderes thermisch umformbares Material aufweisen oder daraus bestehen. Das Folienmaterial ist nicht auf eine bestimmte Dicke, Zusammensetzung, Steifigkeit, Zuführform oder Temperatur beschränkt.

Der Begriff "dreidimensionales Formteil" bezeichnet hierin insbesondere ein aus einem Folienmaterial hergestelltes Formteil, das nach dem Umformen eine von einer ebenen Folienform abweichende räumliche Form aufweist. Ein dreidimensionales Formteil kann insbesondere Vertiefungen, Erhebungen, Seitenwände, Randabschnitte, Gewindeabschnitte, Prägungen, Rillen, Flaps, Hinterschneidungen, Funktionsabschnitte und/oder andere durch Umformen erzeugte Formabschnitte aufweisen. Der Begriff umfasst insbesondere, aber nicht ausschließlich, Deckel, Verschlusselemente, Flaschendeckel, Becherdeckel oder vergleichbare Formteile.

Der Begriff "Formteil" bezeichnet hierin allgemein ein durch Umformen, Thermoformen, Strecken, Druckbeaufschlagen, Vakuumbeaufschlagen, Stanzen, Prägen und/oder weitere Bearbeitungsschritte aus dem Folienmaterial hergestelltes oder herstellbares Teil. Das Formteil kann vollständig fertiggestellt sein oder sich noch in einem Zwischenzustand des Herstellungsverfahrens befinden.

Der Begriff "Formen" bezeichnet hierin insbesondere ein Verändern der Gestalt des Folienmaterials zur Herstellung eines Formteils oder eines Zwischenzustands eines Formteils. Das Formen kann insbesondere ein Strecken, Vorformen, Tiefziehen, Andrücken, Ansaugen, Aufblasen, Prägen, Umlegen, Ausbilden von Randabschnitten, Ausbilden von Gewindeabschnitten und/oder Ausbilden sonstiger Funktions- oder Formabschnitte umfassen. Das Formen kann durch mechanische Einwirkung, durch Druckluft, durch Unterdruck, durch Vakuum, durch eine Temperaturführung oder durch eine Kombination hiervon erfolgen.

Der Begriff "Bewegen" bezeichnet hierin insbesondere jede relative Verlagerung zweier Bauteile oder Baugruppen zueinander. Ein Bewegen kann insbesondere ein lineares Verlagern, paralleles Verlagern, Annähern, Entfernen, Eintauchen, Herausziehen, Kippen, Schwenken, Rotieren oder eine Kombination hiervon umfassen. Dabei kann eines der Bauteile ortsfest bleiben und das andere Bauteil bewegt werden, oder beide Bauteile können bewegt werden.

Der Begriff "Druckluft" bezeichnet hierin insbesondere ein unter Druck stehendes Gas oder Gasgemisch, das zum Erzeugen eines Überdrucks, eines Druckunterschieds oder einer Druckbeaufschlagung verwendet werden kann. Druckluft ist nicht auf Umgebungsluft beschränkt, sondern kann auch andere geeignete Gase oder Gasgemische umfassen, soweit diese für den jeweiligen Formprozess technisch geeignet sind.

Der Begriff "Einbringen" von Druckluft bezeichnet hierin insbesondere ein Zuführen, Einleiten, Beaufschlagen, Anlegen oder Bereitstellen von Druckluft in einem Formraum, Druckraum, Werkzeugbereich, Kanal, Spalt, Hohlraum oder an einer Formfläche. Ein Einbringen von Druckluft kann kontinuierlich, stufenweise, pulsierend, zeitweise oder in Abhängigkeit von einer Stellung oder Bewegung von Werkzeugkomponenten erfolgen.

Der Begriff "Erzeugen" eines Unterdrucks oder Vakuums bezeichnet hierin insbesondere ein Herstellen, Anlegen, Aufbauen, Bereitstellen oder Aufrechterhalten eines gegenüber einem Referenzdruck niedrigeren Drucks. Das Erzeugen kann insbesondere durch Absaugen, Evakuieren, Verbinden mit einer Saugeinrichtung oder durch eine andere geeignete Drucksenkung erfolgen. Ein Unterdruck oder Vakuum muss dabei nicht zwingend einem vollständigen Vakuum entsprechen, sondern umfasst jeden für den jeweiligen Formvorgang technisch wirksamen verminderten Druck.

Der Begriff "Druckunterschied" bezeichnet hierin insbesondere eine Druckdifferenz zwischen zwei Bereichen, Seiten oder Räumen, insbesondere zwischen gegenüberliegenden Seiten des Folienmaterials oder zwischen einem Formraum und einem weiteren Werkzeug- oder Umgebungsbereich. Der Druckunterschied kann durch Überdruck, Unterdruck, Vakuum oder durch eine Kombination hiervon erzeugt werden und kann während des Verfahrens konstant bleiben oder verändert werden.

Die vorstehend beschriebenen Merkmale, Verfahrensschritte, Bauteile, Anordnungen, Bewegungsabläufe, Druckzustände und Wirkungen sind, soweit sich aus dem technischen Zusammenhang nicht zwingend etwas anderes ergibt, nicht auf die jeweils ausdrücklich beschriebene Kombination beschränkt.

Vielmehr können einzelne der vorstehend beschriebenen Merkmale, Verfahrensschritte, Bauteile oder Anordnungen jeweils für sich genommen oder in beliebigen technisch sinnvollen Unterkombinationen mit einem oder mehreren weiteren der vorstehend beschriebenen Merkmale, Verfahrensschritte, Bauteile oder Anordnungen eine eigenständige technische Lehre und/oder eine eigenständige Erfindung bilden.

Insbesondere ist die Aufnahme mehrerer Merkmale in eine gemeinsame Ausgestaltung, in einen gemeinsamen Anspruch oder in eine gemeinsame Beschreibungspassage nicht dahingehend zu verstehen, dass diese Merkmale notwendig nur in der jeweils angegebenen Kombination verwirklicht werden können oder dass sämtliche Merkmale dieser Kombination für die Lösung einer jeweiligen technischen Aufgabe zwingend erforderlich sind.

Soweit nicht ausdrücklich anders angegeben oder technisch zwingend erforderlich, sind die einzelnen Merkmale der beschriebenen Ausführungen optional und können unabhängig voneinander weggelassen, ersetzt, ergänzt oder mit Merkmalen anderer Ausführungen kombiniert werden.

Dies gilt insbesondere auch für solche Merkmale, die in den abhängigen Ansprüchen gemeinsam angegeben sind; diese können jeweils einzeln oder in beliebigen technisch sinnvollen Unterkombinationen mit den Merkmalen eines unabhängigen Anspruchs oder mit Merkmalen anderer abhängiger Ansprüche kombiniert werden. Dementsprechend soll die Offenbarung auch auf einzelne Merkmale und auf Zwischenverallgemeinerungen gerichtet sein, soweit diese für den Fachmann unmittelbar und eindeutig aus der vorliegenden Offenbarung ableitbar sind.

Insbesondere können eigenständige Erfindungen oder eigenständige technische Lehren durch einzelne oder beliebige technisch sinnvolle Kombinationen der folgenden Merkmalsgruppen gebildet sein: das Erzeugen eines Druckunterschieds mittels Druckluft und/oder Vakuum in einem Formraum, bevor das Formwerkzeug eine geschlossene Formstellung erreicht hat; das werkzeugseitige Abdichten eines Formraums vor Erreichen der geschlossenen Formstellung, insbesondere mittels mindestens einer Dichtung zwischen einer beweglichen Klemmeinrichtung und einem Werkzeugkörper; das Klemmen des Folienmaterials zwischen einer ersten Klemmeinrichtung und einer zweiten Klemmeinrichtung vor Erreichen der geschlossenen Formstellung; das Strecken des Folienmaterials mittels eines Formeinsatzes während einer Schließbewegung des Formwerkzeugs; das Vorformen und/oder Formen des Folienmaterials durch Unterdruck über den Formeinsatz und/oder durch Überdruck über einen Formraum, eine Druckglocke, einen Niederhalter oder ein anderes Werkzeugteil; das Verändern des Druckunterschieds während einer relativen Bewegung der Werkzeugteile; das Formen eines dreidimensionalen Formteils mit einem Gewindeabschnitt; das Entformen eines solchen Formteils durch Rotation des Formeinsatzes; das verdrehsichere Halten eines Formteilrands während der Rotation des Formeinsatzes; das Ausführen eines Stanzhubs in demselben Formwerkzeug; das Abscheren des Folienmaterials an einer Seitenfläche eines Formeinsatzes oder eines Schneidstempels; das Ausbilden eines Formteilrands, von Flaps, Rillen, Prägungen und/oder einer umlaufenden Rinne; das Verlagern eines Niederhalters in den Formraum zur zusätzlichen Formung eines Randbereichs des Formteils; das Ausbilden des Formwerkzeugs als Kippwerkzeug oder als Werkzeug für eine Kippmaschine; sowie die Verwendung des Verfahrens oder Formwerkzeugs zum Thermoformen von Formteilen, insbesondere Verschlusselementen, Deckeln, Flaschendeckeln oder Becherdeckeln, aus einem Folienmaterial, insbesondere aus einem PET-Material.

Die vorstehend beschriebene Reihenfolge von Verfahrensschritten, Druckbeaufschlagungen, Abdichtvorgängen, Klemmvorgängen, Formvorgängen, Stanzvorgängen, Entformungsvorgängen und Bewegungen ist, soweit nicht ausdrücklich anders angegeben oder technisch zwingend erforderlich, nicht beschränkend zu verstehen. Einzelne Verfahrensschritte können zeitlich überlappend, teilweise gleichzeitig oder in abweichender Reihenfolge ausgeführt werden, sofern die jeweilige technische Funktion erreicht wird.

Insbesondere kann ein Einbringen von Druckluft und/oder ein Erzeugen eines Unterdrucks vor, während oder nach einem Klemmen des Folienmaterials, vor, während oder nach einem Strecken des Folienmaterials, vor, während oder nach einem Vorstanzen und/oder vor dem Erreichen einer geschlossenen Formstellung erfolgen, soweit der jeweilige Druckunterschied technisch wirksam erzeugbar ist.

Entsprechendes gilt für die beschriebenen Bewegungen des ersten Werkzeugteils, des zweiten Werkzeugteils, der beweglichen Platten, der Klemmeinrichtungen, der Werkzeugkörper, des Formeinsatzes, des Schneidstempels, des Stanzwerkzeugs, des Niederhalters, der Druckglocke und/oder weiterer Werkzeugkomponenten. Diese Bewegungen können jeweils durch gemeinsame Antriebe, durch separate Antriebe, durch mechanische, pneumatische, hydraulische und/oder elektrische Antriebe, durch Zwangssteuerungen, Kurvenscheiben, Federelemente, pneumatische Federelemente oder Kombinationen hiervon bewirkt werden, soweit dies technisch sinnvoll ist. Eine lineare Verlagerung, eine parallele Verlagerung, eine Relativverlagerung, eine Rotation und/oder ein Kippen können jeweils einzeln oder in technisch sinnvoller Kombination vorgesehen sein. Soweit ein Druckunterschied beschrieben ist, kann dieser durch Unterdruck, Überdruck oder eine Kombination aus Unterdruck und Überdruck erzeugt werden. Ein Unterdruck und/oder ein Überdruck kann dabei über beliebige geeignete Öffnungen, Kanäle, Spalte, Formflächen, Formkonturen, Werkzeugbereiche, Formeinsätze, Schneidstempel, Niederhalter, Druckglocken, separate Druckeinrichtungen und/oder separate Saugeinrichtungen erzeugt oder angelegt werden, soweit dies mit der jeweiligen Ausgestaltung technisch vereinbar ist. Ebenso können Dichtungen, Dichtelemente, Dichtlippen, O-Ringe oder andere Dichtmittel einzeln oder mehrfach, umlaufend oder abschnittsweise, werkzeugseitig, folienseitig oder zwischen relativ beweglichen Werkzeugkomponenten vorgesehen sein, soweit dadurch ein für den jeweiligen Formvorgang ausreichender Druckunterschied erzeugt oder aufrechterhalten werden kann.

Soweit hierin ein Formteil, ein Deckel, ein Verschlusselement, ein Flaschendeckel, ein Becherdeckel, ein Gewindeabschnitt, ein Innengewinde, ein Außengewinde, Flaps, Widerhaken, Rillen, Prägungen oder eine umlaufende Rinne beschrieben sind, sind diese Merkmale nicht auf die jeweils gezeigte Geometrie beschränkt. Vielmehr können Formteile mit abweichender Größe, Kontur, Wandstärke, Randgestaltung, Gewindegeometrie, Prägungsgeometrie oder Funktionsgeometrie hergestellt werden, sofern das jeweilige Formteil durch Thermoformen eines Folienmaterials mit dem beschriebenen Verfahren und/oder Formwerkzeug herstellbar ist.

Die Begriffe Formstellung, Formposition, geschlossene Formstellung, Klemmstellung, Initialstellung, Vorformstellung, Stanzstellung und Entformstellung dienen, soweit nicht ausdrücklich anders angegeben, der Beschreibung relativer Zustände der Werkzeugkomponenten und sind nicht auf eine bestimmte absolute Lage, Orientierung oder Bewegungsrichtung beschränkt.

Angaben wie oben, unten, seitlich, radial, axial, innen, außen, in Formrichtung oder in Stanzrichtung beziehen sich auf die in den Figuren dargestellten Ausführungsbeispiele und können bei abweichender Orientierung des Formwerkzeugs entsprechend angepasst verstanden werden. Die hierin beschriebenen Ausführungen können daher auch mit umgekehrter Werkzeuganordnung, mit vertauschten Bewegungsrichtungen oder mit abweichender räumlicher Orientierung verwirklicht werden, soweit die jeweilige technische Funktion erhalten bleibt.

### Bezugszeichenliste

- 100: Formwerkzeug

- 200: erstes Werkzeugteil
- 210: erster Werkzeugkörper
- 211: Öffnung

- 220: erste bewegliche Platte
- 222: erste Öffnung
- 224: Kontur
- 226: Stanzraum
- 228: Kontaktfläche

- 230: Formeinsatz
- 232: Formkontur
- 236: Formfläche
- 238: Gewindeabschnitt

- 240: Schneidstempel
- 241: Schulter
- 242: Außenkontur
- 243: zweite Formfläche
- 244: zweiter Formrand
- 246: Seitenfläche
- 248: zweite Formkontur

- 250: Mittelstück

- 300: zweites Werkzeugteil
- 310: zweiter Werkzeugkörper
- 312: Aufnahme
- 314: Stanzkontur
- 316: Stanzwerkzeug

- 320: zweite bewegliche Platte
- 321: Abschnitt
- 322: zweite Öffnung
- 324: Formraum
- 328: Kontaktfläche

- 330: Niederhalter
- 332: Formrand
- 334: dritte Formkontur
- 336: Unterseite
- 338: Ring
- 339: Außenkontur

- 340: Werkzeugplatte
- 342: Druckglocke
- 344: Aufnahme

- 350: Dichtung

- 400: Folienmaterial
- 410: gestrecktes Folienmaterial
- 412: dreidimensionales Formteil
- 430: Deckel
- 432: Formteilrand
- 434: zentraler Deckelabschnitt
- 435: Gewindeabschnitt
- 436: Flap
- 438: Rille
- 439: Rille
- 440: Rinne

## Patentansprüche

1. Verfahren zum Thermoformen von dreidimensionalen Formteilen (412) aus einem Folienmaterial (400), wobei ein erstes Werkzeugteil (200) und ein zweites Werkzeugteil (300) eines Formwerkzeugs (100) relativ zueinander bewegt werden, wobei zum Formen eines Folienmaterials (400) ein Druckunterschied mittels Druckluft und/oder Vakuum in mindestens einem Formraum (324) des Formwerkzeugs (100) erzeugt wird, wobei ein Einbringen von Druckluft und/oder ein Erzeugen eines Unterdrucks erfolgt, bevor das Formwerkzeug (100) eine geschlossene Formstellung erreicht hat.

2. Verfahren nach Anspruch 1, wobei das Einbringen von Druckluft und/oder das Erzeugen eines Unterdrucks erfolgt, wenn sich das Formwerkzeug (100) in einem zumindest teilweise geöffneten Zustand befindet, bevor das erste Werkzeugteil (200) und das zweite Werkzeugteil (300) des Formwerkzeugs (100) die geschlossene Formstellung erreicht haben.

3. Verfahren nach Anspruch 1, wobei während des Schließens des Formwerkzeugs (100) der Formraum (324) werkzeugseitig abgedichtet wird.

4. Verfahren nach einem der Ansprüche 1 bis 3, wobei das Folienmaterial (400) vor dem Erreichen der Formstellung geklemmt wird.

5. Verfahren nach Anspruch 4, wobei das Folienmaterial (400) zwischen gegenüberliegenden Kontaktflächen (228; 328) des ersten Werkzeugteils (200) und des zweiten Werkzeugteils (300) geklemmt wird, bevor das Formwerkzeug (100) die Formstellung erreicht hat, wobei mindestens eine der Kontaktflächen (228; 328) eine bewegliche Klemmeinrichtung des ersten Werkzeugteils (200) oder des zweiten Werkzeugteils (300) ist, wobei eine erste bewegliche Klemmeinrichtung mit einem ersten Werkzeugkörper (210) verbunden und relativ zu diesem verlagerbar ist und/oder wobei eine zweite bewegliche Klemmeinrichtung mit einem zweiten Werkzeugkörper (310) verbunden und relativ zu diesem verlagerbar ist.

6. Verfahren nach Anspruch 5, wobei das Folienmaterial (400) zwischen einer ersten Klemmeinrichtung des ersten Werkzeugteils (200) und einer zweiten Klemmeinrichtung des zweiten Werkzeugteils (300) geklemmt wird.

7. Verfahren nach einem der Ansprüche 1 bis 6, wobei der mindestens eine Formraum (324) über mindestens eine Dichtung (350) abgedichtet wird, und/oder wobei der Druckunterschied durch Einbringen von Druckluft und/oder Erzeugen eines Vakuums mindestens zwischen der geschlossenen Formstellung und einem zumindest teilweise geöffneten Zustand verändert wird.

8. Verfahren nach einem der Ansprüche 1 bis 7, wobei das Einbringen von Druckluft und/oder Erzeugen eines Vakuums erfolgt, bevor ein Formeinsatz (230) des ersten Werkzeugteils (200) oder des zweiten Werkzeugteils (300) das Folienmaterial (400) streckt oder wenn ein Formeinsatz (230) des ersten Werkzeugteils (200) oder des zweiten Werkzeugteils (300) in Kontakt mit dem Folienmaterial (400) kommt.

9. Formwerkzeug (100) zum Thermoformen von dreidimensionalen Formteilen (412) aus einem Folienmaterial (400), mindestens aufweisend ein erstes Werkzeugteil (200) und ein zweites Werkzeugteil (300), die relativ zueinander bewegbar sind, wobei zum Formen eines Folienmaterials (400) ein Druckunterschied mittels Druckluft und/oder Vakuum in mindestens einem Formraum (324) des Formwerkzeugs (100) erzeugt wird, wobei das erste Werkzeugteil (200) und/oder das zweite Werkzeugteil (300) mindestens eine Dichtung (350) aufweisen, die dazu ausgebildet ist, mindestens einen Formraum (324) zwischen dem ersten Werkzeugteil (200) und dem zweiten Werkzeugteil (300) so abzudichten, dass ein Formen mittels Druckunterschied durchführbar ist, bevor das Formwerkzeug (100) eine geschlossene Formstellung erreicht hat.

10. Formwerkzeug (100) nach Anspruch 9, wobei das erste Werkzeugteil (200) und/oder das zweite Werkzeugteil (300) mindestens eine Klemmeinrichtung und einen Werkzeugkörper (210; 310) aufweisen, wobei die mindestens eine Klemmeinrichtung mit dem zugehörigen Werkzeugkörper (210; 310) verbunden und relativ gegenüber dem zugehörigen Werkzeugkörper (210; 310) verlagerbar ist.

11. Formwerkzeug (100) nach Anspruch 10, wobei die mindestens eine Klemmeinrichtung so ausgebildet ist, dass sie beim Schließen des Formwerkzeugs (100) dem zugehörigen Werkzeugkörper (210; 310) vorauseilt, wobei die mindestens eine Dichtung (350) zwischen der mindestens einen Klemmeinrichtung und dem zugehörigen Werkzeugkörper (210; 310) angeordnet ist.

12. Formwerkzeug (100) nach Anspruch 11, wobei die mindestens eine Dichtung (350) am Werkzeugkörper (210; 310) angeordnet ist.

13. Formwerkzeug (100) nach Anspruch 12, wobei der Werkzeugkörper (210; 310) mindestens eine Aufnahme (344) aufweist, in welche die zugehörige Klemmeinrichtung beim Schließen des Formwerkzeugs (100) mindestens teilweise eintaucht, und/oder wobei die mindestens eine Dichtung (350) in der Aufnahme (344) angeordnet ist.

14. Formwerkzeug (100) nach einem der Ansprüche 9 bis 13, wobei die mindestens eine Dichtung (350) aus Silikon oder einem Elastomer besteht oder ein Silikon oder Elastomer aufweist15. Formwerkzeug nach einem der Ansprüche 10 bis 14, wobei
- das erste Werkzeugteil (200) mindestens einen Formeinsatz (230) mit einer Formkontur (232) für ein dreidimensionales Formteil (412) und eine erste Klemmeinrichtung mit mindestens einer Öffnung (222) aufweist, wobei die erste Klemmeinrichtung und der mindestens eine Formeinsatz (230) relativ zueinander bewegbar sind,
- das zweites Werkzeugteil (300) mindestens ein Stanzwerkzeug (316) und eine zweite Klemmeinrichtung mit mindestens einer Öffnung (322) aufweist, wobei das mindestens eine Stanzwerkzeug (316) und die zweite Klemmeinrichtung relativ zueinander bewegbar sind,
- das Formwerkzeug (100) dazu ausgebildet ist, durch relative Verlagerung der ersten Klemmeinrichtung und der zweiten Klemmeinrichtung Folienmaterial (400) einzuklemmen, wobei der Formeinsatz (230) aus einer Initialstellung, in welcher der Formeinsatz (230) eine der zweiten Klemmeinrichtung zugewandte Kontaktfläche (228) der ersten Klemmeinrichtung nicht überragt, durch die Öffnungen (222, 322) der ersten Klemmeinrichtung und der zweiten Klemmeinrichtung in einen Formraum (324) des zweiten Werkzeugteils (300) in eine Formstellung verlagerbar ist, wobei durch Verlagerung des Formeinsatzes (230) geklemmtes Folienmaterial (400) streckbar ist,
- das Formwerkzeug (100) Mittel zum Erzeugen eines Druckunterschieds aufweist, so dass gestrecktes Folienmaterial (410) gegen die Formkontur (232) zur Umformung drückbar ist, und wobei nach dem Umformen ein Stanzhub durchführbar ist, wobei das Stanzwerkzeug (316) durch die Öffnung (322) der zweiten beweglichen Platte (320) hindurch in einen Stanzraum (226) der Öffnung (222) der ersten Klemmeinrichtung drückbar und dabei das Folienmaterial (400) an einer korrespondieren Schnittfläche des ersten Werkzeugteils (200) stanzbar ist.
